# EUROPEAN PATENT SPECIFICATION

(11) **EP 2 051 133 B1**
(45) Date of publication and mention of the grant of the patent: **14.11.2012**
(21) Application number: 07768089.0
(22) Date of filing: 03.07.2007
(51) Int. Cl.: G02F 1/1337, G02F 1/1362, G02F 1/139, G02F 1/13

(54) **LIQUID CRYSTAL DISPLAY DEVICE**
FLÜSSIGKRISTALLANZEIGEEINRICHTUNG
DISPOSITIF D'AFFICHAGE À CRISTAUX LIQUIDES

(30) Priority: 14.07.2006 JP 2006194772
(43) Date of publication of application: 22.04.2009
(73) Proprietor: Sharp Kabushiki Kaisha, Osaka-shi, Osaka 545-8522 (JP)
(72) Inventor: TSUBATA, Toshihide, Tsu-shi Mie 514-0003 (JP)
(74) Representative: Müller - Hoffmann & Partner
(86) International application number: PCT/JP2007/063315
(87) International publication number: WO 2008/007583

(56) References cited:
- JP-A- 11 084 421
- JP-A- 11 133 429
- JP-A- 2000 250 436
- JP-A- 2003 107 526
- JP-A- 2003 273 365
- JP-A- 2004 318 086
- US-A1- 2003 178 628
- US-A1- 2006 146 243
- US-B1- 6 249 011
- US-B1- 6 512 564

## Description

### TECHNICAL FIELD

The present invention generally relates to a liquid crystal display device and more particularly relates to a liquid crystal display device with a wide viewing angle characteristic.

### BACKGROUND ART

Recently, the display performances of liquid crystal displays (LCDs) have been improved to the point that more and more manufacturers adopt LCD panels as TV monitors, for example. As a result of those researches and developments, the viewing angle characteristic of LCDs has been improved to a certain degree but not satisfactorily in some respects. Among other things, there is still a high demand for improvement of the viewing angle characteristic of an LCD using a vertical alignment liquid crystal layer (which is sometimes called a "VA mode LCD").

A VA mode LCD, which is currently used for a TV set with a big screen, for example, adopts a multi-domain structure, in which multiple liquid crystal domains are formed in a single pixel region, to improve the viewing angle characteristic. An MVA mode is often adopted as a method of forming such a multi-domain structure. Specifically, according to the MVA mode, an alignment control structure is provided on one of the two substrates, which face each other with a vertical alignment liquid crystal layer interposed between them, so as to contact with the liquid crystal layer, thereby forming multiple domains with mutually different alignment directions (i.e., tilt directions), the number of which is typically four. As the alignment control structure, a slit (as an opening) or a rib (as a projection structure) may be provided for an electrode, thereby creating an anchoring force from both sides of the liquid crystal layer.

If a slit or a rib is adopted, however, the anchoring force will be applied onto liquid crystal molecules non-uniformly within a pixel region because the slit or rib has a linear structure unlike the situation where the pretilt directions are defined by an alignment film in a conventional TN mode LCD. As a result, the response speed may have a distribution unintentionally. In addition, since the transmittance of light will decrease in the areas with the slits or ribs, the brightness of the screen will decrease, too.
**Patent Document No. 1:** Japanese Patent Application Laid-Open Publication No. 11-133429
**Patent Document No. 2:** Japanese Patent Application Laid-Open Publication No. 11-352486

US 2006/0146243 A1 refers to multi-domain vertical alignment liquid crystal display device, where each picture element includes a first and a second sub-picture element electrode. A switching element applies a first voltage to the first sub-picture element and a second voltage, which is lower than the first voltage, to the second sub-picture element. Each sub-picture element electrode is divided into domain control fields, where a plurality of slits extend in a direction defining the respective domain control field. In addition to the slits, a vertical alignment film aligns the liquid crystal molecules in a vertical direction. US 2003/0178628 A1 describes a TFT substrate where a light-shielding pattern is configured in the same manufacturing step as a gate line. The light-shielding pattern is formed below a semiconductor layer to reduce a leakage current arising because of light from a backlight striking the semiconductor layer in a transistor region. US 6,249,011 B1 describes a thin film transistor array, wherein scanning lines are formed of a first conductive film on a transparent insulating substrate. In addition, signal lines are formed of a second conductive film and pixel electrodes are formed on a gate insulating film in a region enclosed with adjacent scanning lines and adjacent signal lines. The thin film transistors are coupled to the pixel electrodes. Light shielding films are formed of the first conductive film, where light shielding overlap portions are formed with peripheral portions facing the signal lines of respective pixel electrodes via the gate insulating film. The light shielding film has portions near both ends thereof along the signal line projected toward a side of the signal line to form correction overlap portions overlapping the signal lines via the gate insulating film. This configuration allows repairing interruptions in the signal lines to be effectuated without increasing process load.

### DISCLOSURE OF INVENTION

### PROBLEMS TO BE SOLVED BY THE INVENTION

To avoid such a problem, the multi-domain structure is preferably formed by defining the pretilt directions with an alignment film for a VA mode LCD, too. Thus, the present inventors discovered and confirmed via experiments that a unique misalignment occurs in a VA mode LCD and affects its display quality.

Even in a conventional LCD in which the multi-domain structure is formed using an alignment film, a technique of providing an opaque portion for cutting the light that has been transmitted through an area with misalignment to minimize the deterioration in display quality due to the misalignment is also known (see Patent Document No. 1, for example).

The conventional multi-domain structure is provided with such an opaque portion to shield an area with an optical transmittance that is higher than a predetermined value (i.e., an area that looks brighter when viewed straight than an area where liquid crystal molecules are aligned normally) due to a misalignment such as a reverse tilt in a TN mode LCD, for example. However, the present inventors discovered that the display quality of a VA mode LCD could not be improved sufficiently just by shielding such an area that looked brighter when viewed straight than an area where liquid crystal molecules were aligned normally.

In order to overcome the problems described above, the present invention has an object of providing a VA mode liquid crystal display device with excellent display quality.

### MEANS FOR SOLVING THE PROBLEMS

A the problem is solved by a liquid crystal display device according to any of claim 1 and 4.

A liquid crystal display device according to the present invention includes: a vertical alignment liquid crystal layer; a first substrate and a second substrate, which face each other with the liquid crystal layer interposed between them; a first electrode, which is arranged on the first substrate so as to face the liquid crystal layer; a second electrode, which is arranged on the second substrate so as to face the liquid crystal layer; and at least one alignment film, which is arranged in contact with the liquid crystal layer. A pixel region includes a first liquid crystal domain in which liquid crystal molecules are tilted in a predetermined first direction around the center of a plane, and approximately at the middle of the thickness, of the liquid crystal layer in response to a voltage applied. The first liquid crystal domain is located close to at least a part of an edge of the first electrode. The part includes a first edge portion in which an azimuthal direction that is perpendicular to the part and that points toward the inside of the first electrode defines an angle greater than 90 degrees with respect to the first direction. Either the first substrate or the second substrate has an opaque member that includes a first opaque portion for selectively shielding at least a part of the first edge portion from incoming light.

The pixel region further includes second, third and fourth liquid crystal domains in which liquid crystal molecules are tilted in second, third and fourth directions, respectively, around the center of the plane, and approximately at the middle of the thickness, of the liquid crystal layer in response to the voltage applied. The first, second, third and fourth directions are defined such that an angle formed between any two of the four directions is approximately equal to an integral multiple of 90 degrees. The second liquid crystal domain is located close to at least a part of another edge of the first electrode, and the part includes a second edge portion in which an azimuthal direction that is perpendicular to the part and that points toward the inside of the first electrode defines an angle greater than 90 degrees with respect to the second direction. The third liquid crystal domain is located close to at least a part of still another edge of the first electrode, and the part includes a third edge portion in which an azimuthal direction that is perpendicular to the part and that points toward the inside of the first electrode defines an angle greater than 90 degrees with respect to the third direction. The fourth liquid crystal domain is located close to at least a part of yet another edge of the first electrode, and the part includes a fourth edge portion in which an azimuthal direction that is perpendicular to the part and that points toward the inside of the first electrode defines an angle greater than 90 degrees with respect to the fourth direction. The opaque member may further include second, third and fourth opaque portions for selectively shielding at least a part of the second, third and fourth edge portions, respectively, from incoming light.

According to an embodiments, the first, second, third and fourth liquid crystal domains are arranged such that the tilt directions of any two adjacent ones of the liquid crystal domains define an angle of approximately 90 degrees between them.

In a specific embodiment, if the horizontal direction of a display screen has an azimuthal angle of zero degrees, the first, second, third and fourth directions are an approximately 225 degree direction, an approximately 315 degree direction, an approximately 45 degree direction and an approximately 135 degree direction, respectively. The first and third edge portions are parallel to a vertical direction and the second and fourth edge portions are parallel to the horizontal direction.

In an alternative specific embodiment, if the horizontal direction of a display screen has an azimuthal angle of zero degrees, the first, second, third and fourth directions are an approximately 225 degree direction, an approximately 315 degree direction, an approximately 45 degree direction and an approximately 135 degree direction, respectively. The first and third edge portions are parallel to the horizontal direction and the second and fourth edge portions are parallel to a vertical direction.

In another alternative specific embodiment, if the horizontal direction of a display screen has an azimuthal angle of zero degrees, the first, second, third and fourth directions are an approximately 225 degree direction, an approximately 315 degree direction, an approximately 45 degree direction and an approximately 135 degree direction, respectively. Each of the first, second, third and fourth edge portions includes a first part that is parallel to the horizontal direction and a second part that is parallel to a vertical direction.

In another embodiment, the first and second directions form an angle of approximately 180 degrees between them. The second liquid crystal domain is located close to at least a part of another edge of the first electrode, and the part includes a second edge portion in which an azimuthal direction that is perpendicular to the part and that points toward the inside of the first electrode defines an angle greater than 90 degrees with respect to the second direction. Each of the first and second edge portions includes a first part that is parallel to the horizontal direction and a second part that is parallel to a vertical direction. And the opaque member further includes a second opaque portion for selectively shielding at least a part of the second edge portion from incoming light.

In a specific embodiment thereof, if the horizontal direction on the display screen has an azimuthal angle of zero degrees, the first direction is either an approximately 135 degree direction or an approximately 225 degree direction.

In another specific embodiment, if the horizontal direction of a display screen has an azimuthal angle of zero degrees, the first, second, third and fourth directions are an approximately 90 degree direction, an approximately 180 degree direction, an approximately 0 degree direction and an approximately 270 degree direction, respectively. The first and fourth edge portions are parallel to the horizontal direction and the second and third edge portions are parallel to a vertical direction.

In still another specific embodiment, if the horizontal direction of a display screen has an azimuthal angle of zero degrees, the first, second, third and fourth directions are an approximately 225 degree direction, an approximately 315 degree direction, an approximately 45 degree direction and an approximately 135 degree direction, respectively. The first, second, third and fourth edge portions are all parallel to a vertical direction.

The opaque member includes a central opaque portion for selectively shielding at least a portion of a boundary area of each of the first, second, third and fourth liquid crystal domains, which is adjacent to another one of the liquid crystal domains, from incoming light.

The opaque member may include another opaque portion for shielding an intersection between a boundary area of each of the first, second, third and fourth liquid crystal domains, which is adjacent to another one of the liquid crystal domains, and one of the first, second, third and fourth edge portions from incoming light.

The first substrate further includes a TFT, a gate bus line, a source bus line, a drain extension line, and a storage capacitor line. One of the first, second, third, fourth, central and another opaque portions is defined by at least a portion of at least one line selected from the group consisting of the gate bus line, the source bus line, the drain extension line, and the storage capacitor line.

The at least one line may have a portion that is bent or broadened in a direction that crosses its length direction, and the at least the portion of the at least one line includes at least a part of the bent or broadened portion.

The second substrate may include a black matrix layer, and one of the first, second, third, fourth, central and another opaque portions is defined by a portion of the black matrix layer.

In yet another preferred embodiment, the liquid crystal display device further includes two polarizers, which are arranged so as to face each other with the liquid crystal layer interposed between them and to have their transmission axes crossed at right angles. The first, second, third and fourth directions define an angle of approximately 45 degrees with respect to the transmission axes of the two polarizers.

In yet another preferred embodiment, the vertical alignment liquid crystal layer includes a liquid crystal material with negative dielectric anisotropy. The at least one alignment film includes two alignment films that are arranged so as to sandwich the liquid crystal layer between them. Respective pretilt directions defined by the two alignment films are different from each other by approximately 90 degrees.

In yet another preferred embodiment, the at least one alignment film includes two alignment films that are arranged so as to sandwich the liquid crystal layer between them. Respective pretilt angles defined by the two alignment films are substantially equal to each other.

In yet another preferred embodiment, the at least one alignment film is a photo-alignment film.

Still another liquid crystal display device according to the present invention includes: a vertical alignment liquid crystal layer; a first substrate and a second substrate, which face each other with the liquid crystal layer interposed between them; a first electrode, which is arranged on the first substrate so as to face the liquid crystal layer; a second electrode, which is arranged on the second substrate so as to face the liquid crystal layer; and at least one alignment film, which is arranged in contact with the liquid crystal layer. A pixel region includes first, second, third and fourth liquid crystal domains in which liquid crystal molecules are tilted in first, second, third and fourth directions, respectively, around the center of a plane, and approximately at the middle of the thickness, of the liquid crystal layer in response to a voltage applied. The first, second, third and fourth directions are defined such that an angle formed between any two of the four directions is approximately equal to an integral multiple of 90 degrees. Each of the first, second, third and fourth liquid crystal domains is adjacent to another one of the liquid crystal domains. An opaque member includes a central opaque portion for selectively shielding at least a portion of a boundary area of each of the first, second, third and fourth liquid crystal domains, which is adjacent to another one of the liquid crystal domains, from incoming light.

The first liquid crystal domain is located close to at least a part of an edge of the first electrode, and the part includes a first edge portion in which an azimuthal direction that is perpendicular to the part and that points toward the inside of the first electrode defines an angle greater than 90 degrees with respect to the first direction. The second liquid crystal domain is located close to at least a part of another edge of the first electrode, and the part includes a second edge portion in which an azimuthal direction that is perpendicular to the part and that points toward the inside of the first electrode defines an angle greater than 90 degrees with respect to the second direction. The third liquid crystal domain is located close to at least a part of still another edge of the first electrode, and the part includes a third edge portion in which an azimuthal direction that is perpendicular to the part and that points toward the inside of the first electrode defines an angle greater than 90 degrees with respect to the third direction. The fourth liquid crystal domain is located close to at least a part of yet another edge of the first electrode, and the part includes a fourth edge portion in which an azimuthal direction that is perpendicular to the part and that points toward the inside of the first electrode defines an angle greater than 90 degrees with respect to the fourth direction.

In another preferred embodiment, the first, second, third and fourth liquid crystal domains are arranged in two rows and two columns so as to define a matrix pattern.

In an alternative preferred embodiment, the first, second, third and fourth liquid crystal domains are arranged in line in a predetermined direction.

The first substrate further includes a TFT, a gate bus line, a source bus line, a drain extension line, and a storage capacitor line, and the central opaque portion is defined by at least a portion of the drain extension line .

The at least one line may have a portion that is bent or broadened in a direction that crosses its length direction, and the at least the portion of the at least one line includes at least a part of the bent or broadened portion.

In yet another preferred embodiment, the second substrate further includes a black matrix layer, and the central opaque portion is defined by a portion of the black matrix layer.

In yet another preferred embodiment, the liquid crystal display device further includes two polarizers, which are arranged so as to face each other with the liquid crystal layer interposed between them and to have their transmission axes crossed at right angles. The first, second, third and fourth directions define an angle of approximately 45 degrees with respect to the transmission axes of the two polarizers.

In yet another preferred embodiment, the vertical alignment liquid crystal layer includes a liquid crystal material with negative dielectric anisotropy. The at least one alignment film includes two alignment films that are arranged so as to sandwich the liquid crystal layer between them. Respective pretilt directions defined by the two alignment films are different from each other by approximately 90 degrees.

In yet another preferred embodiment, the at least one alignment film includes two alignment films that are arranged so as to sandwich the liquid crystal layer between them, and respective pretilt angles defined by the two alignment films are substantially equal to each other.

In yet another preferred embodiment, the at least one alignment film is a photo-alignment film.

Yet another liquid crystal display device according to the present invention includes: a vertical alignment liquid crystal layer; a first substrate and a second substrate, which face each other with the liquid crystal layer interposed between them; a first electrode, which is arranged on the first substrate so as to face the liquid crystal layer; a second electrode, which is arranged on the second substrate so as to face the liquid crystal layer; and at least one alignment film, which is arranged in contact with the liquid crystal layer. A pixel region includes first, second, third and fourth liquid crystal domains in which liquid crystal molecules are tilted in first, second, third and fourth directions, respectively, around the center of a plane, and approximately at the middle of the thickness, of the liquid crystal layer in response to a voltage applied between the first and second electrodes. The first, second, third and fourth directions are defined such that an angle formed between any two of the four directions is approximately equal to an integral multiple of 90 degrees. The first, second, third and fourth liquid crystal domains are arranged in two columns and two rows so as to define a matrix pattern and to be adjacent to each other. The first substrate includes a TFT, a gate bus line, a source bus line, a drain extension line, a storage capacitor line, and at least one islanded opaque portion, which is made of the same layer as the gate bus line. At least a portion of the drain extension line defines at least a part of a central opaque portion that selectively shields a boundary area, where each of the first, second, third and fourth liquid crystal domains contacts with another one of the liquid crystal domains, from incoming light. And the at least one islanded opaque portion has a portion that overlaps with the drain extension line with a gate insulating film interposed between them.

The first, second, third and fourth liquid crystal domains include a liquid crystal domain that produces a dark area, which looks darker than a gray scale level being presented for a viewer located in front of the device, inside of, and substantially parallel to, an edge portion of the first electrode. The at least one islanded opaque portion further includes an edge shielding portion for selectively shielding at least a part of the dark area from incoming light.

In this particular preferred embodiment, the source bus line has a branched structure with multiple branches, and the edge shielding portion further includes a part that overlaps with one of the branches of the source bus line with the gate insulating film interposed between them.

In another preferred embodiment, the first liquid crystal domain is located close to at least a part of an edge of the first electrode. The part includes a first edge portion in which an azimuthal direction that is perpendicular to the part and that points toward the inside of the first electrode defines an angle greater than 90 degrees with respect to the first direction. The second liquid crystal domain is located close to at least a part of another edge of the first electrode. The part includes a second edge portion in which an azimuthal direction that is perpendicular to the part and that points toward the inside of the first electrode defines an angle greater than 90 degrees with respect to the second direction. The third liquid crystal domain is located close to at least a part of another edge of the first electrode. The part includes a third edge portion in which an azimuthal direction that is perpendicular to the part and that points toward the inside of the first electrode defines an angle greater than 90 degrees with respect to the third direction. The fourth liquid crystal domain is located close to at least a part of another edge of the first electrode. The part includes a fourth edge portion in which an azimuthal direction that is perpendicular to the part and that points toward the inside of the first electrode defines an angle greater than 90 degrees with respect to the fourth direction. Each of the first, second, third and fourth liquid crystal domains is adjacent to another one of the liquid crystal domains. The at least one islanded opaque portion includes an intersection area shielding portion for shielding, from incoming light, an area where the boundary area in which each of the first, second, third and fourth liquid crystal domains is adjacent to another one of the liquid crystal domains intersects with any of the first, second, third and fourth edge portions.

In a specific preferred embodiment, the source bus line has a branched structure with multiple branches, and the intersection area shielding portion further includes a part that overlaps with one of the branches of the source bus line with the gate insulating film interposed between them.

In yet another preferred embodiment, the first substrate further includes an insulating layer, which is arranged between the drain extension line and the first electrode. The drain extension line includes an extended portion that overlaps with the storage capacitor line with the gate insulating film interposed between them. The extended portion of the drain extension line is connected to the first electrode at a contact hole that has been cut through the insulating layer. The at least one islanded opaque portion includes a repairing islanded opaque portion that overlaps with a portion of the drain extension line that leads from the TFT to the contact hole with the gate insulating film interposed between them and that has a broader width than the drain extension line.

Yet another liquid crystal display device according to the present invention includes: a vertical alignment liquid crystal layer; a first substrate and a second substrate, which face each other with the liquid crystal layer interposed between them; a first electrode, which is arranged on the first substrate so as to face the liquid crystal layer; a second electrode, which is arranged on the second substrate so as to face the liquid crystal layer; and at least one alignment film, which is arranged in contact with the liquid crystal layer. A pixel region includes first, second, third and fourth liquid crystal domains in which liquid crystal molecules are tilted in first, second, third and fourth directions, respectively, around the center of a plane, and approximately at the middle of the thickness, of the liquid crystal layer in response to a voltage applied. The first, second, third and fourth directions are defined such that an angle formed between any two of the four directions is approximately equal to an integral multiple of 90 degrees. The first liquid crystal domain is located close to at least a part of an edge of the first electrode, and the part includes a first edge portion in which an azimuthal direction that is perpendicular to the part and that points toward the inside of the first electrode defines an angle greater than 90 degrees with respect to the first direction. The second liquid crystal domain is located close to at least a part of another edge of the first electrode, and the part includes a second edge portion in which an azimuthal direction that is perpendicular to the part and that points toward the inside of the first electrode defines an angle greater than 90 degrees with respect to the second direction. The third liquid crystal domain is located close to at least a part of still another edge of the first electrode, and the part includes a third edge portion in which an azimuthal direction that is perpendicular to the part and that points toward the inside of the first electrode defines an angle greater than 90 degrees with respect to the third direction. The fourth liquid crystal domain is located close to at least a part of yet another edge of the first electrode, and the part includes a fourth edge portion in which an azimuthal direction that is perpendicular to the part and that points toward the inside of the first electrode defines an angle greater than 90 degrees with respect to the fourth direction. Each of the first, second, third and fourth liquid crystal domains is adjacent to another one of the liquid crystal domains. Either the first substrate or the second substrate includes an opaque member, which includes an opaque portion for shielding an intersection between a boundary area of each of the first, second, third and fourth liquid crystal domains, which is adjacent to another one of the liquid crystal domains, and one of the first, second, third and fourth edge portions from incoming light.

The first, second, third and fourth liquid crystal domains are arranged such that the tilt directions of any two adjacent ones of the liquid crystal domains define an angle of approximately 90 degrees between them.

In a specific preferred embodiment, if the horizontal direction of a display screen has an azimuthal angle of zero degrees, the first, second, third and fourth directions are an approximately 225 degree direction, an approximately 315 degree direction, an approximately 45 degree direction and an approximately 135 degree direction, respectively. The first and third edge portions are parallel to a vertical direction and the second and fourth edge portions are parallel to the horizontal direction.

In an alternative preferred embodiment, if the horizontal direction of a display screen has an azimuthal angle of zero degrees, the first, second, third and fourth directions are an approximately 225 degree direction, an approximately 315 degree direction, an approximately 45 degree direction and an approximately 135 degree direction, respectively. The first and third edge portions are parallel to the horizontal direction and the second and fourth edge portions are parallel to a vertical direction.

In another alternative preferred embodiment, if the horizontal direction of a display screen has an azimuthal angle of zero degrees, the first, second, third and fourth directions are an approximately 90 degree direction, an approximately 180 degree direction, an approximately 0 degree direction and an approximately 270 degree direction, respectively. The first and fourth edge portions are parallel to the horizontal direction and the second and third edge portions are parallel to a vertical direction.

In still another alternative preferred embodiment, if the horizontal direction of a display screen has an azimuthal angle of zero degrees, the first, second, third and fourth directions are an approximately 225 degree direction, an approximately 315 degree direction, an approximately 45 degree direction and an approximately 135 degree direction, respectively. The first, second, third and fourth edge portions are all parallel to a vertical direction.

In yet another preferred embodiment, the opaque portion is substantially triangular.

The opaque member includes a central opaque portion for selectively shielding at least a portion of a boundary area of each of the first, second, third and fourth liquid crystal domains, which is adjacent to another one of the liquid crystal domains, from incoming light.

The first substrate further includes a TFT, a gate bus line, a source bus line, a drain extension line, and a storage capacitor line. Either the opaque portion or the central opaque portion is defined by at least a portion of at least one line selected from the group consisting of the gate bus line, the source bus line, the drain extension line, and the storage capacitor line.

In yet another preferred embodiment, the second substrate further includes a black matrix layer, and either the opaque portion or the central opaque portion is defined by a portion of the black matrix layer.

In yet another preferred embodiment, the liquid crystal display device further includes two polarizers, which are arranged so as to face each other with the liquid crystal layer interposed between them and to have their transmission axes crossed at right angles. The first, second, third and fourth directions define an angle of approximately 45 degrees with respect to the transmission axes of the two polarizers.

In yet another preferred embodiment, the vertical alignment liquid crystal layer includes a liquid crystal material with negative dielectric anisotropy, and the at least one alignment film includes two alignment films that are arranged so as to sandwich the liquid crystal layer between them. The pretilt direction defined by one of the two alignment films is different from that defined by the other alignment film by approximately 90 degrees.

In yet another preferred embodiment, the at least one alignment film includes two alignment films that are arranged so as to sandwich the liquid crystal layer between them, and respective pretilt angles defined by the two alignment films are substantially equal to each other.

In yet another preferred embodiment, the at least one alignment film is a photo-alignment film.

### EFFECTS OF THE INVENTION

According to the present invention, the display quality of a VA mode liquid crystal display device can be improved in terms of its viewing angle dependence, in particular. Also, according to the present invention, the display quality of a liquid crystal display device having a multi-domain structure defined by an alignment film can be improved.

### BRIEF DESCRIPTION OF DRAWINGS

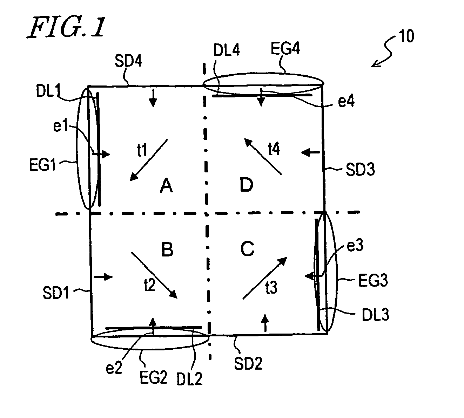

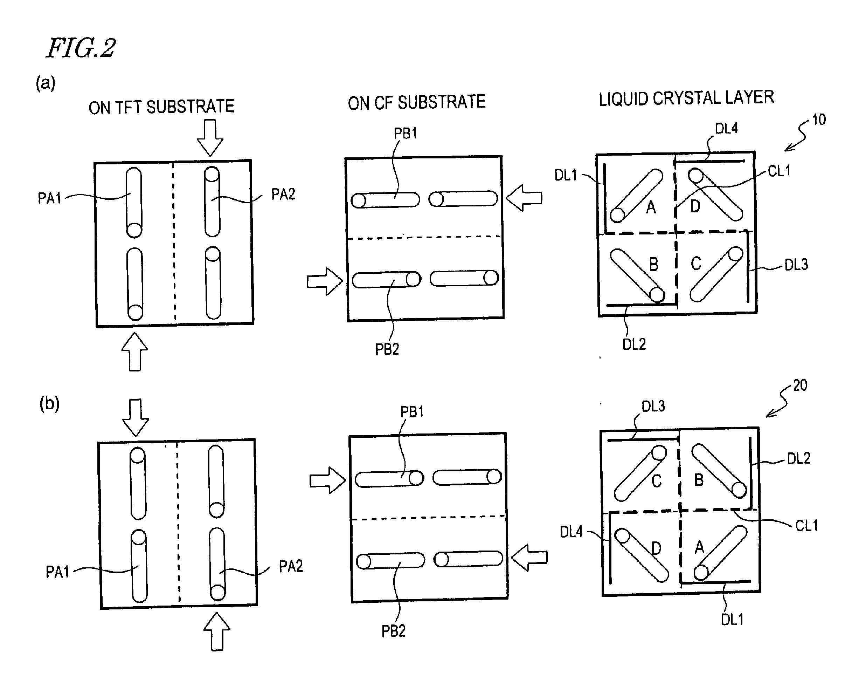

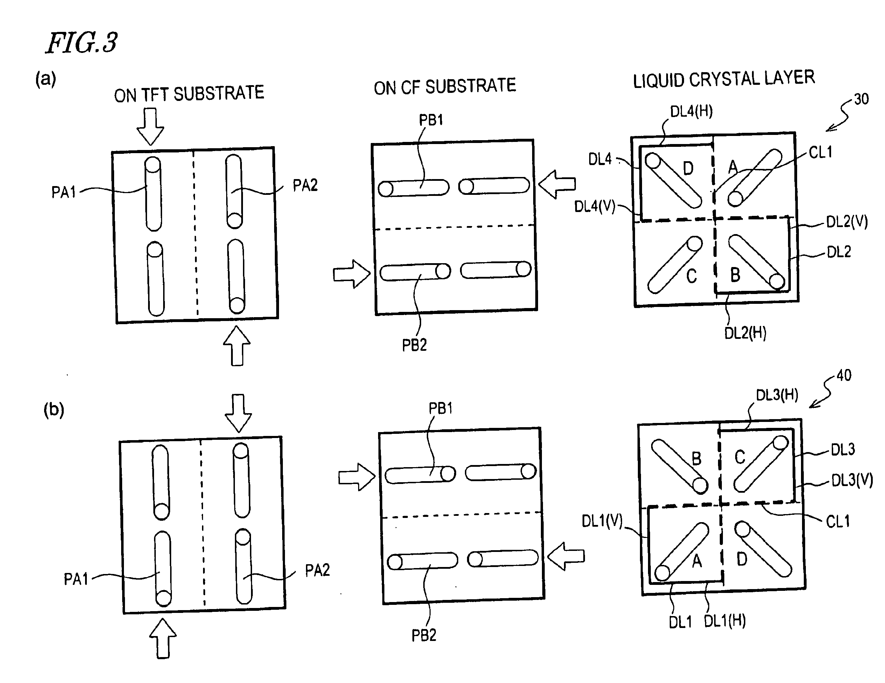

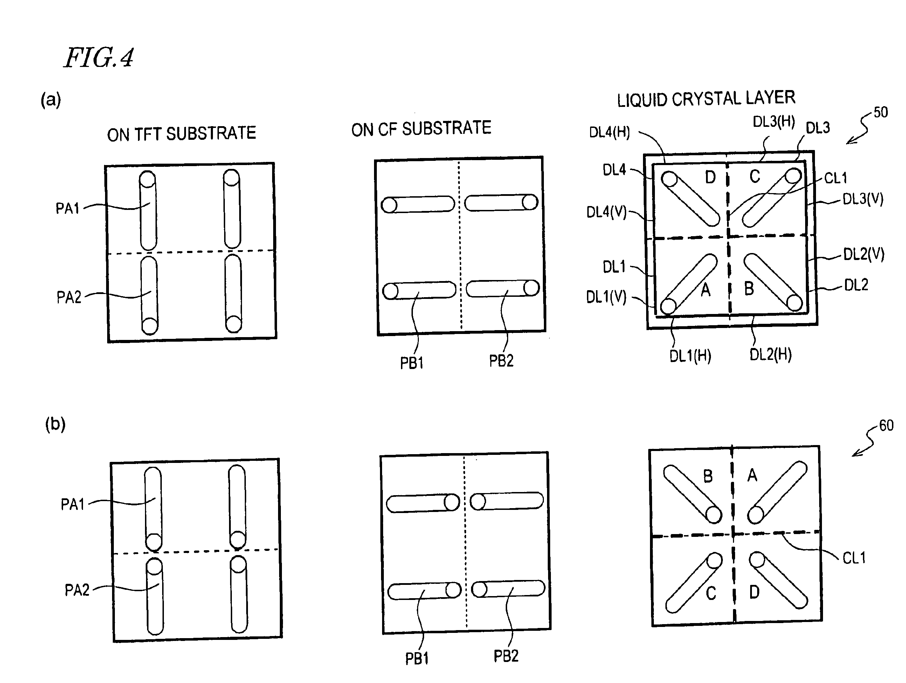

FIG. **1** illustrates an exemplary pixel region with a multi-domain structure in a VA mode liquid crystal display device according to the present invention.
Portions **(a)** and **(b)** of FIG. **2** illustrate an exemplary pixel region with a multi-domain structure in a VA mode liquid crystal display device according to the present invention.
Portions **(a)** and **(b)** of FIG. **3** illustrate another exemplary pixel region with a multi-domain structure in a VA mode liquid crystal display device according to the present invention.
Portions **(a)** and **(b)** of FIG. **4** illustrate still another exemplary pixel region with a multi-domain structure in a VA mode liquid crystal display device according to the present invention.
FIGS. **5(a)** and **5(b)** illustrate yet another exemplary pixel region with a multi-domain structure in a VA mode liquid crystal display device according to the present invention.
FIG. **6** is a cross-sectional view of a pixel region of a VA mode liquid crystal display device according to the present invention, showing the equipotential curve of an electric field created in the liquid crystal layer, the orientation directions of liquid crystal molecules in the layer, and the transmittance thereof, which were figured out by simulations.
FIG. **7** is a cross-sectional view of a pixel region of a VA mode liquid crystal display device according to the present invention, showing the equipotential curve of an electric field created in the liquid crystal layer, the orientation directions of liquid crystal molecules in the layer, and the transmittance thereof, which were figured out by simulations.
FIG. **8** is a cross-sectional view of a pixel region of a VA mode liquid crystal display device according to the present invention, showing the equipotential curve of an electric field created in the liquid crystal layer, the orientation directions of liquid crystal molecules in the layer, and the transmittance thereof, which were figured out by simulations.
FIG. **9** is a cross-sectional view of a pixel region of a VA mode liquid crystal display device according to the present invention, showing the equipotential curve of an electric field created in the liquid crystal layer, the orientation directions of liquid crystal molecules in the layer, and the transmittance thereof, which were figured out by simulations.
FIG. **10** is graphs showing the distributions of transmission intensities in a situation where the pixel region shown in portion **(a)** of FIG. **2** is viewed from the direction defined by an azimuth angle of 45 degrees.
FIG. **11** is a schematic representation illustrating an exemplary pixel structure for a liquid crystal display device for discuning effects of the present invention.
FIG. **12** is a schematic representation illustrating another exemplary pixel structure for a liquid crystal display device for disccuning effects of the present invention.
FIG. **13** is a schematic representation illustrating still another exemplary pixel structure for a liquid crystal display device for discuning effects of the present invention.
FIG. **14** is a schematic representation illustrating yet another exemplary pixel structure for a liquid crystal display device for discuning effects of the present invention.
FIG. **15** is a cross-sectional view schematically illustrating the pixel structure shown in FIG. **14**.
FIG. **16** is a schematic representation illustrating yet another exemplary pixel structure for a liquid crystal display device for discuning effects of the present invention.
FIG. **17** is a cross-sectional view schematically illustrating the pixel structure shown in FIG. **16**.
FIG. **18** is a schematic representation illustrating yet another exemplary pixel structure for a liquid crystal display device for discuning effects of the present invention.
FIG. **19** is a schematic representation illustrating yet another exemplary pixel structure for a liquid crystal display device for discuning effects of according to the present invention.
FIG. **20** is a schematic representation showing another area in which misalignment occurs in a pixel region with a multi-domain structure in a VA mode liquid crystal display device for discuning effects of the present invention.
FIG. **21** is a schematic representation illustrating yet another exemplary pixel structure for a liquid crystal display device for discuning effects of the present invention.
FIG. 22 is a schematic plan view illustrating an exemplary pixel structure, including islanded opaque portions made of a gate metal layer, for a liquid crystal display device according to the present invention.
FIG. **23** is a schematic cross-sectional view of the structure as viewed on the plane **23A-23A'** shown in FIG. **22**.
FIG. 24 is a schematic plan view illustrating another exemplary pixel structure, including islanded opaque portions made of a gate metal layer, for a liquid crystal display device according to the present invention.
FIG. **25** is a schematic cross-sectional view of the structure as viewed on the plane **25A-25A'** shown in FIG. **24**.
FIG. **26** is a schematic plan view illustrating yet another exemplary pixel structure, including islanded opaque portions made of a gate metal layer, for a liquid crystal display device according to the present invention.

### DESCRIPTION OF REFERENCE NUMERALS

- **1**: TFT substrate
- **1a, 2a**: transparent substrate
- **2**: CF substrate
- **3**: liquid crystal layer
- **3a**: liquid crystal molecule
- **10**: pixel region
- **11**: pixel electrode
- **12**: counter electrode
- **111**: pixel electrode
- **111a**: subpixel electrode
- **111E**: broadened portion of pixel electrode or subpixel electrode
- **112**: gate bus line
- **113**: CS bus line (storage capacitor line)
- **113E**: extended portion of CS bus line
- **114**: source bus line
- **115**: gate insulating film
- **116, 116a, 116b**: TFT
- **117**: drain extension line
- **117B**: branch of drain extension line
- **117E**: extended portion of drain extension line
- **118a**: interlevel dielectric film (photosensitive resin layer)
- **SD1** to **SD4**: edges of pixel electrode
- **EG1** to **EG4**: edge portions of pixel electrode
- **A** to **D**: liquid crystal domain
- **t1** to **t4**: tilt direction (reference alignment direction)
- **e1** to **e4**: azimuth direction that is perpendicular to edge of pixel electrode and pointed inward in pixel electrode

### BEST MODE FOR CARRYING OUT THE INVENTION

Hereinafter, preferred embodiments of a liquid crystal display device according to the present invention will be described with reference to the accompanying drawings. However, the present invention is in no way limited to the following specific preferred embodiments. According to the present invention, a liquid crystal display device, including a vertical alignment liquid crystal layer of which the pretilt direction is controlled by using at least one alignment film, has its display quality improved by providing an opaque film where misalignment occurs.

The display quality is affected to different degrees depending on where misalignment has occurred. That is why the type of misalignment to be hidden behind an opaque portion also changes with the display performance required. In the following description, three types of misalignment to occur in three different locations in a pixel region (namely, an electrode edge portion, a central portion and an intersection portion) will be described separately. These three locations may be shielded independently of each other. Two or more of these locations may be shielded in any arbitrary combination or all of them may be shielded, too.

As used herein, the "vertical alignment liquid crystal layer" means a liquid crystal layer in which the axis of liquid crystal molecules (which will be sometimes referred to herein as an "axis direction") defines a tilt angle of approximately 85 degrees or more with respect to the surface of a vertical alignment film. The liquid crystal molecules have negative dielectric anisotropy and are combined with polarizers that are arranged as crossed Nicols to conduct a display operation in normally black mode. The alignment film may be provided for at least one of the two substrates. However, to stabilize the alignment, each of the two substrates is preferably provided with an alignment film. In the preferred embodiment to be described below, each of the two substrates is provided with a vertical alignment film. Also, since every misalignment occurs within the multi-domain structure except that occurring in an electrode edge portion, a four-domain structure that realizes a particularly good viewing angle characteristic will be described as an example. As used herein, the "pixel" refers to a minimum unit for representing a particular gray scale level on the screen, and corresponds to a unit for representing each gray scale level of red (R), green (G) and blue (B) in color display and is also called a "dot". A combination of R, G and B pixels forms a single color display pixel. The "pixel region" refers to a region of a liquid crystal display device that is allocated to a single "pixel" on the screen. The "pretilt direction" is the orientation direction of liquid crystal molecules to be controlled with an alignment film and refers to an azimuthal direction on a display screen. Also, the angle formed by the liquid crystal molecules with respect to the surface of the alignment film in this case will be referred to herein as a "pretilt angle". The pretilt direction will be defined by subjecting the alignment film to a rubbing treatment or a photo-alignment treatment. By changing the combinations of the pretilt directions of the two alignment films that face each other with the liquid crystal layer interposed between them, the four-domain structure can be formed. The quadruple pixel region includes four liquid crystal domains (which will be sometimes simply referred to herein as "domains"). Each of these liquid crystal domains is characterized by the tilt direction of liquid crystal molecules at the center of a plane of the liquid crystal layer, to which a voltage is being applied, and at the middle of the thickness of the liquid crystal layer. Such a tilt direction will be sometimes referred to herein as a "reference alignment direction". And this tilt direction (or reference alignment direction) will have an important effect on the viewing angle dependence of each domain. The tilt direction is also an azimuthal direction. The reference azimuthal direction is supposed to be the horizontal direction on the screen and the azimuth angle is supposed to increase counterclockwise. For example, comparing the display screen to a clock face, the three o'clock direction is supposed to have an azimuth angle of zero degrees and the angle is supposed to increase counterclockwise. By defining the tilt directions of the four liquid crystal domains such that an angle formed between any two of the four directions is approximately equal to an integral multiple of 90 degrees (e.g., as the twelve o'clock direction, the nine o'clock direction, the six o'clock direction and the three o'clock direction, respectively), highly uniform viewing angle characteristic and good display quality are realized. To increase the uniformity of the viewing angle characteristic, the areas of those four liquid crystal domains in the pixel region are preferably equalized with each other. Specifically, the difference between the area of the largest one of the four liquid crystal domains and that of the smallest one of the four is preferably no greater than 25% of the largest area.

The vertical alignment liquid crystal layer of the preferred embodiment to be described below includes a nematic liquid crystal material with negative dielectric anisotropy. The pretilt directions defined by the two alignment films that sandwich the liquid crystal layer between them are different from each other by approximately 90 degrees. The tilt angle (i.e., the reference alignment direction) is defined as an intermediate direction between these two pretilt directions. No chiral agent is added to the liquid crystal layer. And when a voltage is applied to the liquid crystal layer, the liquid crystal molecules located near the alignment films will have a twisted alignment under the anchoring force of the alignment films. If necessary, a chiral agent may be added to the liquid crystal layer. By using such a pair of vertical alignment films defining two pretilt directions (alignment treatment directions) that are perpendicular to each other, the VA mode in which the liquid crystal molecules have a twisted alignment is sometimes called a vertical alignment twisted nematic (VATN) mode (see Patent Document No. 2, for example).

In the VATN mode, the pretilt angles defined by the two alignment films are preferably substantially equal to each other as disclosed by the applicant of the present application in Japanese Patent Application No. 2005-141846. By using such a pair of alignment films defining pretilt angles that are approximately equal to each other, the display luminance can be increased. Particularly when the difference between the pretilt angles defined by the two alignment films is within one degree, the tilt direction (i.e., the reference alignment direction) of liquid crystal molecules, located approximately at the middle of the thickness of the liquid crystal layer, can be controlled with good stability and the display luminance can be increased. This is probably because if the difference between the pretilt angles were more than one degree, then the tilt direction would vary noticeably from one location to another in the liquid crystal layer and the transmittance would vary significantly as a result (i.e., some area would have a lower transmittance than a desired one).

According to known methods, the pretilt direction of liquid crystal molecules may be defined by alignment films by subjecting the alignment films to a rubbing treatment or a photo-alignment treatment, by forming a microstructure on an undercoat film for each alignment film and transferring the pattern of the microstructure onto the surface of the alignment film, or by evaporating obliquely an inorganic material such as SiO on an alignment film to define a microstructure thereon. Considering its mass productivity, either the rubbing treatment or the photo-alignment treatment is preferred. Among other things, the photo-alignment treatment is particularly preferred to increase the yield because that treatment is a non-contact method and generates no static electricity due to friction unlike the rubbing treatment. Also, as described in Japanese Patent Application No. 2005-141846 mentioned above, by using a photo-alignment film including a photosensitive group, the variation in pretilt angle can be reduced to one degree or less. The photo-alignment film preferably includes at least one photosensitive group selected from the group consisting of a 4-chalcone group, a 4'-chalcone group, a coumarin group, and a cinnamoyl group to name a few.

The preferred embodiment to be described below is a TFT LCD as a typical example. However, the present invention is naturally applicable for use in a liquid crystal display device that adopts any other driving method.

### Edge portion and central portion

First, misalignment that may occur in an electrode edge portion will be described.

The present inventors discovered that when a voltage was applied to a liquid crystal display device including a vertical alignment liquid crystal layer, of which the pretilt direction was controlled using an alignment film, to present a gray scale level thereon, an area, which looked darker than the gray scale level being presented when viewed straight, appeared inside of, and substantially parallel to, an edge portion of a pixel electrode. In the multi-domain structure, if at any of the edges of a pixel electrode, to which a liquid crystal domain is located close, the azimuthal direction that is perpendicular to the edge and that points toward the inside of the pixel electrode defines an angle greater than 90 degrees with respect to the tilt direction (i.e., the reference alignment direction) of the liquid crystal domain, the area that looks darker than the gray scale level being presented will appear inside of, and substantially parallel to, that edge. The alignment state of the liquid crystal molecules will be disturbed in that area probably because the tilt direction of the liquid crystal domain and the direction in which the anchoring force is produced by an oblique electric field at the edge of the pixel electrode have opposing components.

As used herein, the "gray scale level" refers to any level except black (i.e., the lowest level) and white (i.e., the highest level). The dark area always appears when a non-black gray scale level (including white) is presented as a matter of principle. However, the dark area is easier to perceive at a relatively high gray scale level. Also, unless a particular viewing direction is specified, the display state is always supposed to be a front viewing state (i.e., when the screen is viewed perpendicularly by a viewer located right in front of the screen).

The quadruple pixel region **10** shown in FIG. **1** will be described. FIG. **1** illustrates a pixel region 10 provided for a substantially square pixel electrode for the sake of simplicity. However, the present invention is in no way limited to any particular shape of a pixel region.

The pixel region **10** includes four liquid crystal domains **A, B, C** and **D**, of which the tilt directions (i.e., reference alignment directions) are identified by t1, t2, t3 and t4, respectively. These four tilt directions are defined such that an angle formed between any two of the four directions is approximately equal to an integral multiple of 90 degrees. This is an ideal quadruple structure to achieve the best viewing angle characteristic because the areas of these liquid crystal domains **A, B, C** and **D** are equal to each other. The four liquid crystal domains **A, B, C** and **D** are arranged in two columns and two rows to define a matrix pattern.

The pixel electrode has four edges (or sides) **SD1, SD2, SD3** and **SD4.** An oblique electric field to be generated responsive to a voltage applied produces an anchoring force that has a component that is perpendicular to any of these sides and that points toward the inside of the pixel electrode (in an azimuthal direction). In the example shown in FIG. **1****,** the azimuthal directions that are perpendicular to the four edges SD1, **SD2, SD3** and **SD4** and that point toward the inside of the pixel electrode are identified by e1, e2, e3 and e4, respectively.

Each of the four liquid crystal domains is close to two out of the four edges of the pixel electrode. While a voltage is being applied thereto, each liquid crystal domain is subjected to the anchoring forces that have been produced at those edges by the oblique electric field.

In an edge portion **EG1** of one edge of the pixel electrode, to which the liquid crystal domain **A** is located close, the azimuthal direction **e1** that is perpendicular to the edge portion **EG1** and that points toward the inside of the pixel electrode defines an angle greater than 90 degrees with respect to the tilt direction **t1** of the liquid crystal domain, and misalignment occurs in that area. As a result, when a voltage is applied thereto, the liquid crystal domain **A** produces an area that looks darker than the other areas (which will be referred to herein as a "domain line **DL1"**) parallel to this edge portion **EG1**. It should be noted that in this case, the two polarizers are arranged so as to face each other with the liquid crystal layer interposed between them and to have their transmission axes (polarization axes) crossed at right angles. That is to say, one of the two polarization axes is arranged horizontally and the other vertically. The transmission axes of the polarizers are supposed to be arranged in this manner unless otherwise stated.

In the same way, in an edge portion **EG2** of one edge of the pixel electrode, to which the liquid crystal domain **B** is located close, the azimuthal direction **e2** that is perpendicular to the edge portion **EG2** and that points toward the inside of the pixel electrode defines an angle greater than 90 degrees with respect to the tilt direction **t2** of the liquid crystal domain, and misalignment occurs in that area. As a result, when a voltage is applied thereto, the liquid crystal domain **B** may produce an area that looks darker than the other areas (which will be referred to herein as a "domain line DL2") parallel to this edge portion **EG2**.

In the same way, in an edge portion **EG3** of one edge of the pixel electrode, to which the liquid crystal domain **C** is located close, the azimuthal direction **e3** that is perpendicular to the edge portion **EG3** and that points toward the inside of the pixel electrode defines an angle greater than 90 degrees with respect to the tilt direction **t3** of the liquid crystal domain, and misalignment occurs in that area. As a result, when a voltage is applied thereto, the liquid crystal domain **C** may produce an area that looks darker than the other areas (which will be referred to herein as a "domain line DL3") parallel to this edge portion **EG3**.

In the same way, in an edge portion **EG4** of one edge of the pixel electrode, to which the liquid crystal domain **D** is located close, the azimuthal direction **e4** that is perpendicular to the edge portion **EG4** and that points toward the inside of the pixel electrode defines an angle greater than 90 degrees with respect to the tilt direction **t4** of the liquid crystal domain, and misalignment occurs in that area. As a result, when a voltage is applied thereto, the liquid crystal domain **D** may produce an area that looks darker than the other areas (which will be referred to herein as a "domain line **DL4**") parallel to this edge portion **EG4**.

If the horizontal direction on a display screen (i.e., the three o'clock direction) has an azimuthal angle of zero degrees, the tilt directions **t1, t2, t3** and **t4** are an approximately 225 degree direction (liquid crystal domain **A**), an approximately 315 degree direction (liquid crystal domain **B**), an approximately 45 degree direction (liquid crystal domain **C**) and an approximately 135 degree direction (liquid crystal domain **D**), respectively. The liquid crystal domains **A, B, C** and **D** are arranged such that the tilt directions of any two adjacent ones of the liquid crystal domains define an angle of approximately 90 degrees between them. The angle defined by any of the tilt directions t1, **t2, t3** and **t4** of the liquid crystal domains **A, B, C** and **D** with respect to an associated one of the azimuth angle components e1, **e2, e3** and **e4** of the anchoring forces produced by the oblique electric fields at the nearby edge portions **EG1, EG2, EG3** and **EG4** is approximately 135 degrees.

The dark areas (i.e., the domain lines **DL1** through **DL4)** that are produced parallel to the edge portions **EG1, EG2, EG3** and **EG4,** respectively, within the pixel region **10** deteriorate the viewing angle characteristic as will be described later. Thus, by providing opaque portions that can selectively shield at least respective parts of these edge portions **EG1** through **EG4** from incoming light, the deterioration of the viewing angle characteristic can be minimized.

As used herein, "to shield an edge portion from incoming light" means shielding not only the edge portion **EG1**, EG2, **EG3** or **EG4** but also its associated dark area (i.e., the domain line **DL1, DL2, DL3** or **DL4**) produced near the edge portion in the pixel region from incoming light. The location of each domain line (i.e., the distance from its associated edge portion of the pixel electrode) is changeable with the dimensions of the pixel electrode, for example. Typically, however, the opaque portion may be arranged so as to shield a range that reaches approximately 10 µm to 20 µm from any edge portion of the pixel electrode from incoming light. Also, "an opaque portion for selectively shielding an area from incoming light" means that the opaque portion is provided to shield only that area selectively from incoming light. Nevertheless, there is no need to isolate such an opaque portion for selectively shielding an area from incoming light from the other opaque portions. To minimize the deterioration in viewing angle characteristic, the opaque portions are preferably arranged so as to shield all of the domain lines from incoming light. However, the presence of the opaque portions would decrease the optical efficiency (represented by the effective aperture ratio of a pixel). If an opaque portion that shields at least a part of an edge portion (including a domain line produced around there) from incoming light is provided, then the deterioration in viewing angle characteristic can be lightened at least to that degree. That is why the portions to shield from incoming light may be determined so as to strike an adequate balance between the required performance of the LCD and the optical efficiency to achieve.

Typically, an opaque portion is arranged so as to shield an edge portion and a domain line, which is produced near the edge portion in the pixel region, from incoming light. However, if the pixel aperture ratio should be given a higher priority than the viewing angle characteristic to strike a proper balance between them, only a part or all of the domain line may be shielded from incoming light without shielding the edge portion in order to reduce the area of the opaque portion. In most of the preferred embodiments to be described below, the edge portion and all of the domain line are supposed to be shielded from incoming light. However, in any of those preferred embodiments, the viewing angle characteristic can be improved by providing an opaque portion that selectively shields at least a portion of the domain line.

A method of dividing a pixel region into these four liquid crystal domains **A** through D (i.e., the arrangement of the liquid crystal domains in the pixel region) is not limited to the example illustrated in FIG. **1**. Alternative alignment division methods (or alternative arrangements of liquid crystal domains) will be described with reference to FIGS. **2** through **5****.**

Portion **(a)** of FIG. **2** shows a method of dividing the pixel region **10** shown in FIG. **1****.** More specifically, the pretilt directions **PA1** and **PA2** defined by the alignment film of a TFT substrate (i.e., the lower substrate), the pretilt directions **PB1** and **PB2** defined by the alignment film of a color filter (CF) substrate (i.e., the upper substrate), the tilt directions defined responsive to the application of a voltage to the liquid crystal layer, and areas that look dark due to misalignment (i.e., domain lines **DL1** through **DL4)** are shown in portion (**a)** of FIG. **2**. Those areas are not so-called "disclination lines". These drawings schematically indicate the orientation directions of liquid crystal molecules as viewed by the viewer and show that the liquid crystal molecules are tilted such that the elliptical end of each cylindrical liquid crystal molecule points toward the viewer.

By conducting an alignment treatment so as to achieve the alignment state shown in portion (**a)** of FIG. **2****,** the pixel region **10** can be defined. Specifically, the alignment treatment is conducted so as to divide the pixel region close to the TFT substrate into two and to define the pretilt directions **PA1** and **PA2** that are antiparallel to the vertical alignment film. In this preferred embodiment, a photo-alignment treatment is carried out by irradiating the liquid crystal layer with an ultraviolet ray obliquely that has come from the direction pointed by the arrows. The alignment treatment is also conducted so as to divide the pixel region close to the CF substrate into two and to define the pretilt directions **PB1** and **PB2** that are antiparallel to the vertical alignment film. By bonding these substrates together, a multi-domain structure can be defined in the pixel region **10.** In the photo-alignment treatment, the light does not have to come from the directions indicated above. Alternatively, the pixel region on the CF substrate may be irradiated with a light ray that has come from a direction that is tilted with respect to the vertical direction (i.e., the column direction) and the pixel region on the TFT substrate may be irradiated with a light ray that has come from a direction that is tilted with respect to the horizontal direction (i.e., the row direction).

As already described with reference to FIG. 1, the domain lines **DL1, DL2, DL3** and **DL4** are produced in the liquid crystal domains **A, B, C** and **D** parallel to the edge portions **EG1, EG2, EG3** and **EG4,** respectively. The sum of the lengths of these four domain lines **DL1** through **DL4** will be an approximately half of the overall length of the four edges of the pixel electrode. The edge portions **EG1** and **EG3** (with the domain lines **DL1** and **DL3)** are parallel to the vertical direction, while the edge portions **EG2** and **EG4** (with the domain lines **DL2** and **DL4**) are parallel to the horizontal direction.

As shown in portion **(a)** of FIG**. 2****,** a dark line is also observed in the boundary area of each of the liquid crystal domains A through **D**, which is adjacent to another one of the liquid crystal domains A through **D**, as indicated by the dashed line **CL1**. As will be described later, the crossed dark lines formed around the center of the pixel region are not always misalignment and do not have to be shielded on purpose. However, if an opaque member needs to be arranged within the pixel region, the opaque member is preferably arranged to hide these dark lines because the effective aperture ratio of the pixel (i.e., the optical efficiency) can be increased in that case.

Alternatively, by bonding together the TFT and CF substrates that have been subjected to the alignment treatment as shown in portion **(b)** of FIG. **2****,** a multi-domain structure can be defined for a pixel region **20**. This pixel region **20** also includes four liquid crystal domains **A, B, C** and **D**. The tilt directions of the liquid crystal domains **A** through D are the same as those of the liquid crystal domains of the pixel region **10** shown in FIG. **1****.**

The domain lines **DL1, DL2, DL3** and **DL4** are produced in the liquid crystal domains **A, B, C** and **D** parallel to the edge portions **EG1, EG2, EG3** and **EG4**, respectively. The sum of the lengths of these four domain lines **DL1** through **DL4** will be an approximately half of the overall length of the four edges of the pixel electrode. The edge portions **EG1** and **EG3** (with the domain lines **DL1** and **DL3**) are parallel to the horizontal direction, while the edge portions **EG2** and **EG4** (with the domain lines **DL2** and **DL4)** are parallel to the vertical direction. As shown in portion **(b)** of FIG. **2****,** a dark line is also observed in the boundary area of each of the liquid crystal domains **A** through **D,** which is adjacent to another one of the liquid crystal domains **A** through **D,** as indicated by the dashed line **CL1.** These dark lines are produced in the shape of a cross around the center of the pixel region.

Alternatively, by bonding together the TFT and **CF** substrates that have been subjected to the alignment treatment as shown in portion **(a)** of FIG. **3****,** a multi-domain structure can be defined for a pixel region 30. This pixel region **30** also includes four liquid crystal domains **A, B, C** and **D**. The tilt directions of the liquid crystal domains **A** through **D** are the same as those of the liquid crystal domains of the pixel region **10** shown in FIG**. 1****.**

The tilt directions **t1** and t3 of the liquid crystal domains **A** and **C** do not point toward any edge portions of the pixel electrode, and therefore, no domain lines are produced in these liquid crystal domains. On the other hand, the tilt directions **t2** and **t4** of the liquid crystal domains **B** and **D** point toward their associated edge portions of the pixel electrode and define an angle greater than 90 degrees with respect to azimuthal directions that are perpendicular to the edge portions and that point toward the inside of the pixel electrode. As a result, domain lines **DL2** and **DL4** are produced. Each of the domain lines **DL2** and **DL4** includes a portion **(H)** that is parallel to the horizontal direction and a portion **(V)** that is parallel to the vertical direction. That is to say, each of the tilt directions **t2** and **t4** defines an angle greater than 90 degrees with respect to both an azimuthal direction that is perpendicular to an edge portion of the horizontal edge and that points toward the inside of the pixel electrode and an azimuthal direction that is perpendicular to an edge portion of the vertical edge and that points toward the inside of the pixel electrode. Consequently, domain lines are produced in both of the two directions. As shown in portion **(a)** of FIG. **3**, a dark line is also observed in the boundary area of each of the liquid crystal domains **A** through **D**, which is adjacent to another one of the liquid crystal domains **A** through **D,** as indicated by the dashed line **CL1.** These dark lines are produced in the shape of a cross around the center of the pixel region.

Alternatively, by bonding together the TFT and **CF** substrates that have been subjected to the alignment treatment as shown in portion **(b)** of FIG. **3****,** a multi-domain structure can be defined for a pixel region **40.** This pixel region **40** also includes four liquid crystal domains **A, B, C** and **D**. The tilt directions of the liquid crystal domains **A** through **D** are the same as those of the liquid crystal domains of the pixel region **10** shown in FIG. **1****.**

The tilt directions **t1** and **t3** of the liquid crystal domains **A** and **C** point toward their associated edge portions of the pixel electrode and define an angle greater than **90** degrees with respect to azimuthal directions that are perpendicular to the edge portions and that point toward the inside of the pixel electrode. As a result, domain lines **DL1** and **DL3** are produced. Each of the domain lines **DL1** and **DL3** includes a portion **DL1(H)** or **DL3(H)** that is parallel to the horizontal direction and a portion **DL1(V)** or **DL3(V)** that is parallel to the vertical direction. That is to say, each of the tilt directions **t1** and **t3** defines an angle greater than 90 degrees with respect to both an azimuthal direction that is perpendicular to an edge portion of the horizontal edge and that points toward the inside of the pixel electrode and an azimuthal direction that is perpendicular to an edge portion of the vertical edge and that points toward the inside of the pixel electrode. Consequently, domain lines are produced in both of the two directions. On the other hand, the tilt directions **t2** and **t4** of the liquid crystal domains **B** and **D** do not point toward any edge portions of the pixel electrode, and therefore, no domain lines are produced in these liquid crystal domains. As shown in portion (**b)** of FIG. **3****,** a dark line is also observed in the boundary area of each of the liquid crystal domains **A** through **D,** which is adjacent to another one of the liquid crystal domains **A** through **D**, as indicated by the dashed line **CL1**. These dark lines are produced in the shape of a cross around the center of the pixel region.

Alternatively, by bonding together the TFT and CF substrates that have been subjected to the alignment treatment as shown in portion **(a)** of FIG. **4****,** a multi-domain structure can be defined for a pixel region **50.** This pixel region **50** also includes four liquid crystal domains **A, B, C** and **D**. The tilt directions of the liquid crystal domains **A** through **D** are the same as those of the liquid crystal domains of the pixel region **10** shown in FIG. **1****.**

The tilt directions **t1, t2, t3** and t4 of all of these liquid crystal domains **A, B, C** and **D** point toward their associated edge portions of the pixel electrode and define an angle greater than 90 degrees with respect to azimuthal directions that are perpendicular to the edge portions and that point toward the inside of the pixel electrode. As a result, domain lines **DL1, DL2, DL3** and **DL4** are produced. Each of the domain lines **DL1** through **DL4** includes a portion DL1(H), **DL2(H), DL3(H)** or **DL4(H)** that is parallel to the horizontal direction and a portion **DL1(V), DL2(V), DL3(V)** or **DL4(V)** that is parallel to the vertical direction. That is to say, each of the tilt directions **t1** through **t4** defines an angle greater than 90 degrees with respect to both an azimuthal direction that is perpendicular to an edge portion of the horizontal edge and that points toward the inside of the pixel electrode and an azimuthal direction that is perpendicular to an edge portion of the vertical edge and that points toward the inside of the pixel electrode. Consequently, domain lines are produced in both of the two directions. As shown in portion **(a)** of FIG. **4**, a dark line is also observed in the boundary area of each of the liquid crystal domains **A** through **D,** which is adjacent to another one of the liquid crystal domains **A** through D, as indicated by the dashed line **CL1.** These dark lines are produced in the shape of a cross around the center of the pixel region.

Alternatively, by bonding together the TFT and CF substrates that have been subjected to the alignment treatment as shown in portion **(b)** of FIG. **4**, a multi-domain structure can be defined for a pixel region **60.** This pixel region **60** also includes four liquid crystal domains **A, B, C** and **D.** The tilt directions of the liquid crystal domains **A** through **D** are the same as those of the liquid crystal domains of the pixel region **10** shown in FIG. **1****.**

None of the tilt directions **t1, t2, t3** and **t4** of the liquid crystal domains **A** through **D** point toward any edge portions of the pixel electrode, and therefore, no domain lines are produced at all in these liquid crystal domains. **A** dark line is also observed in the boundary area of each of the liquid crystal domains **A** through **D**, which is adjacent to another one of the liquid crystal domains **A** through **D**, as indicated by the dashed line **CL1.** These dark lines are produced in the shape of a cross around the center of the pixel region.

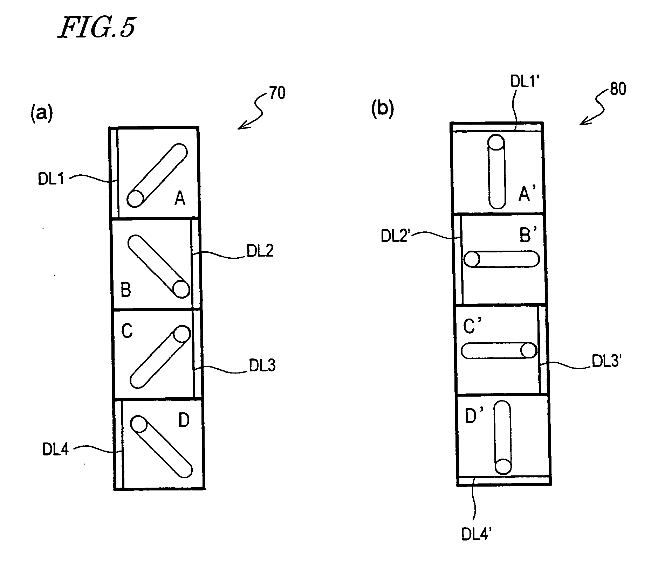

In each of the four-domain structures described above, four liquid crystal domains are arranged in two columns and two rows to define a matrix pattern. However, the present invention is in no way limited to that specific preferred embodiment. Alternatively, the four liquid crystal domains may be arranged in line in a predetermined direction as shown in FIGS. **5(a)** and **5****(b**), in which the liquid crystal domains are arranged in line in the column direction.

The pixel region **70** shown in FIG. **5(a)** also includes four liquid crystal domains **A, B, C** and **D**. The tilt directions of the liquid crystal domains **A** through **D** are the same as those of the liquid crystal domains of the pixel region **10** shown in FIG. **1****.** The tilt directions t1, **t2, t3** and **t4** of all of these liquid crystal domains **A, B, C** and **D** point toward their associated edge portions of the pixel electrode and define an angle greater than 90 degrees with respect to azimuthal directions that are perpendicular to the edge portions and that point toward the inside of the pixel electrode. As a result, domain lines **DL1, DL2, DL3** and **DL4** are produced. All of these domain lines **DL1** through **DL4** are parallel to the vertical direction (i.e., the direction in which the liquid crystal domains are arranged). A dark line is also observed in the boundary area of each of the liquid crystal domains A through **D**, which is adjacent to another one of the liquid crystal domains **A** through **D**. These dark lines are produced horizontally (i.e., perpendicularly to the direction in which the liquid crystal domains are arranged) around the center of the pixel region.

On the other hand, in the pixel region 80 shown in FIG. **5(b)****,** the tilt directions of the four liquid crystal domains **A', B', C'** and **D**' are 90 degrees, 180 degrees, 0 degrees and 270 degrees, respectively, as shown in that drawing. The domain lines **DL1'** and **DL4**' of the liquid crystal domains **A'** and **D'** are parallel to the horizontal direction. And the domain lines **DL2'** and **DL3'** are parallel to the vertical direction. A dark line is also observed in the boundary area of each of the liquid crystal domains **A'** through **D',** which is adjacent to another one of the liquid crystal domains **A'** through **D'**. These dark lines are produced horizontally (i.e., perpendicularly to the direction in which the liquid crystal domains are arranged) around the center of the pixel region. If the tilt directions are defined in this manner, the polarizers are preferably arranged such that their transmission axes define angles of ±45 degrees with respect to the horizontal direction.

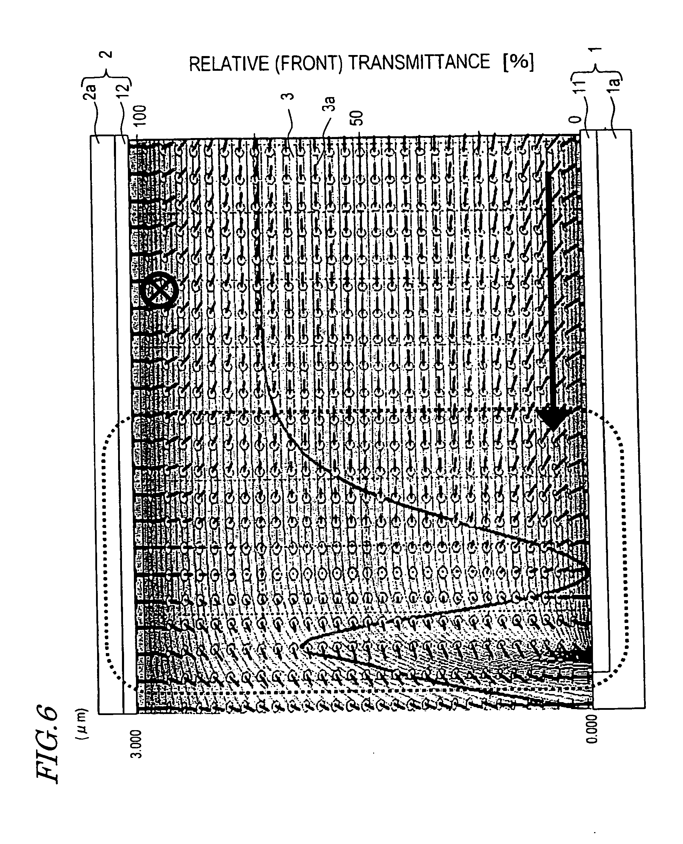

Next, it will be described with reference to FIGS. **6** through **9** how domain lines are produced near the edge portions of a pixel electrode and how dark lines are produced (in the shape of a cross as shown in FIG. **2****,** for example) around the center of the pixel region. FIGS. **6** through **9** are cross-sectional views of a pixel region of a liquid crystal display device, showing the equipotential curve of an electric field created in the liquid crystal layer **3,** the orientation directions of liquid crystal molecules **3a** in the layer, and the relative (front) transmittance thereof, which were figured out by simulations.

This liquid crystal display device includes a TFT substrate **1** including a transparent substrate (e.g., a glass substrate) **1a** and a pixel electrode **11** on the transparent substrate **1a,** a CF substrate **2** including a transparent substrate (e.g., a glass substrate) **2a** and a counter electrode **12** on the transparent substrate **2a**, and a vertical alignment liquid crystal layer **3** interposed between the TFT and CF substrates **1** and **2.** A vertical alignment film (not shown) is provided on each of the TFT and CF substrates **1** and **2** so as to contact with the liquid crystal layer **3**. The liquid crystal layer is subjected to an alignment treatment so as to have the pretilt directions controlled as indicated by the arrows, arrowheads and arrow tails in FIGS. **6** to **9****.**

First, referring to FIG. **6**, illustrated is a cross-sectional view of the left half of the pixel region **20** shown in portion **(b)** of FIG. **2**, including an edge portion of the liquid crystal domain **D** with the domain line **DL4,** as viewed on a plane defined by an azimuth angle of zero degrees. It can be seen that at an edge portion of the pixel electrode **11** shown in FIG. **6**, liquid crystal molecules **3a** (with a tilt angle of 135 degrees), located around the center of a plane of the liquid crystal domain and approximately at the middle of the thickness thereof, are gradually twisted toward the edge portion of the pixel electrode under the anchoring force (defined by an azimuthal direction of zero degrees) of an oblique electric field generated in the edge portion of the pixel electrode **11**. In this example, the twist angle is 135 degrees, which is greater than 90 degrees. That is why due to a variation in retardation in this twisting region of the liquid crystal layer, the relative transmittance varies in a complicated manner as shown in FIG. **6****,** thereby producing a domain line in which the relative transmittance becomes local minimum within the pixel region (i.e., inside of the edge of the pixel electrode). That region with the local minimum transmittance as indicated by the dotted square in FIG. **6** corresponds to the domain line **DL4** in the liquid crystal domain **D** shown in portion **(b)** of FIG. **2****.**

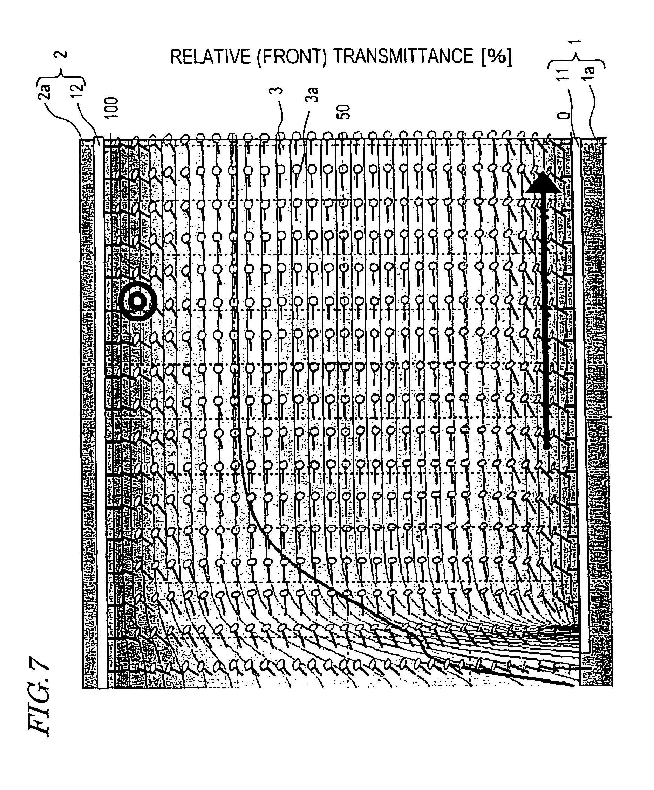

On the other hand, in another edge portion of the pixel electrode in which no domain line is produced as shown in FIG. **7****,** the twist angle of the liquid crystal molecules (i.e., the difference in tilt direction between the liquid crystal molecules located around the center of the liquid crystal domain and the liquid crystal molecules, of which the alignment is controlled by an oblique electric field that has been generated in the edge portion of the pixel electrode **11**) is 90 degrees or less. And the relative transmittance decreases monotonically from the central portion of the pixel region toward the end thereof and reaches its local minimum outside of the pixel region (i.e., at the left end of FIG. **7**), not inside of the pixel region. FIG. **7** is a cross-sectional view of the lower half of the liquid crystal domain **D** shown in portion **(b)** of FIG. **2**, including another edge portion of the liquid crystal domain **D** without the domain line **DL4,** as viewed on a plane defined by an azimuth angle of 90 degrees.

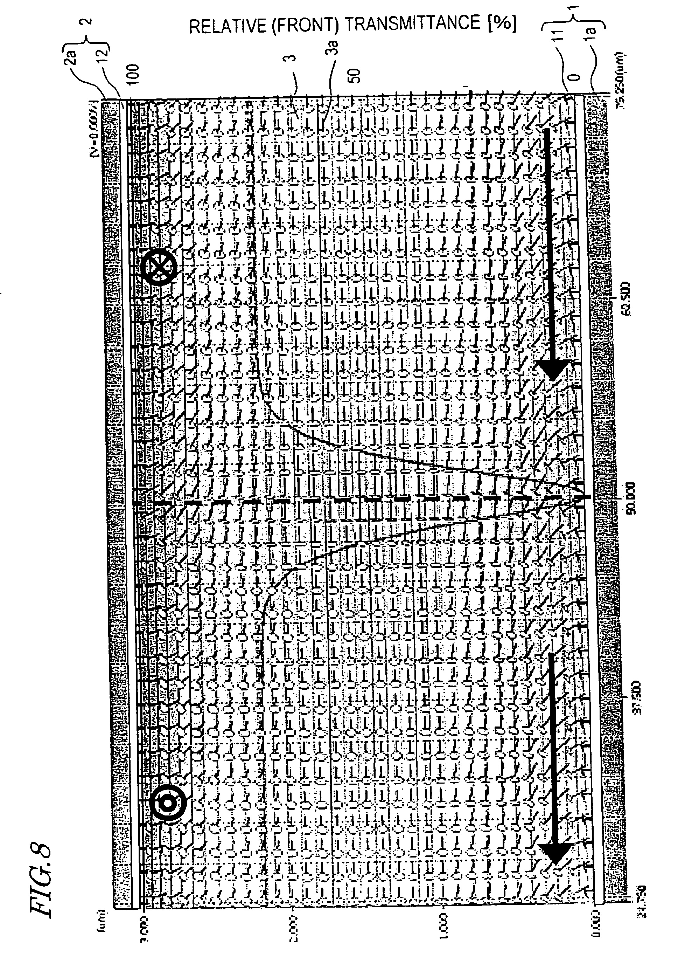

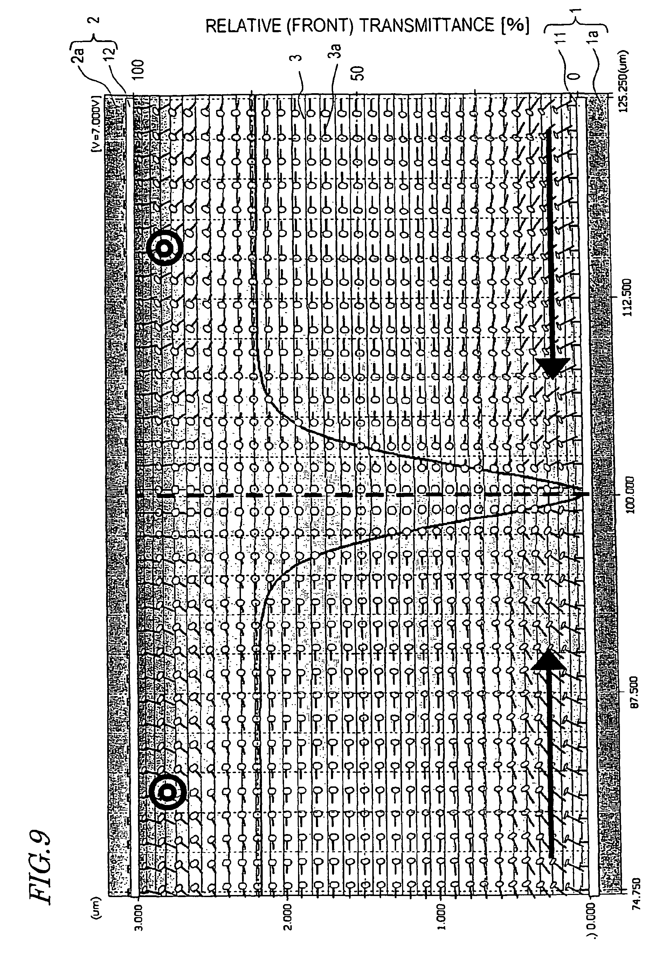

Meanwhile, as shown in FIGS. **8** and **9**, the liquid crystal molecules also have a twist angle of 90 degrees or less in the boundary area in which two liquid crystal domains are adjacent to each other within the pixel region. Thus, the relative transmittance also changes simply and reaches a local minimum value there. FIG. **8** is a cross-sectional view of the liquid crystal domains **D** and **A** shown in portion **(b)** of FIG. **2****,** including the boundary area between them, as viewed on a plane defined by an azimuth angle of zero degrees. FIG. **9** is a cross-sectional view of the liquid crystal domains **B** and **A** shown in portion **(b)** of FIG. **4**, including the boundary area between them, as viewed on a plane defined by an azimuth angle of zero degrees.

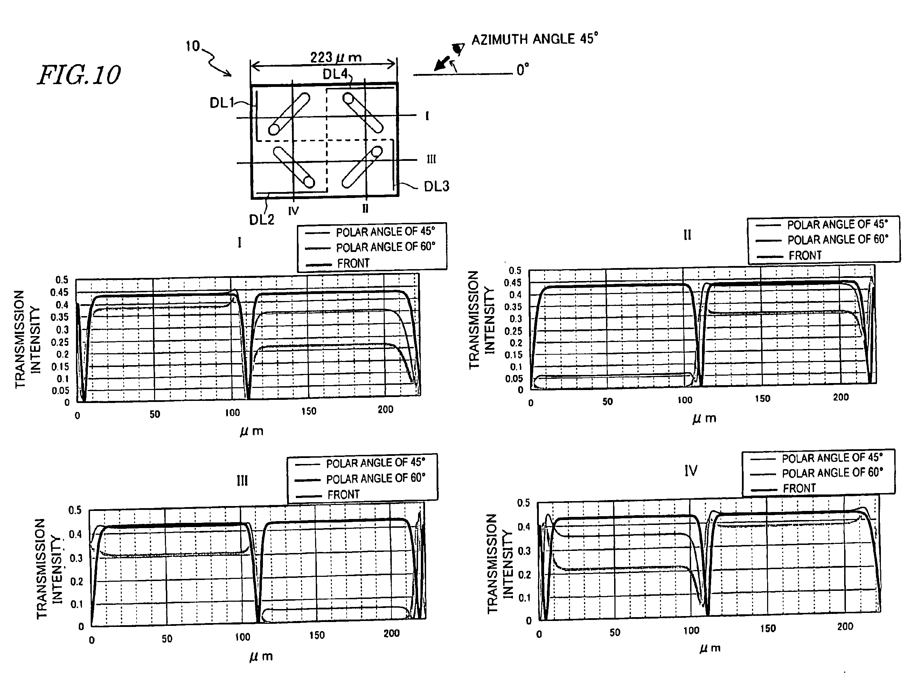

FIG. **10** shows the distributions of transmission intensities in a situation where the pixel region **10** is viewed from the direction defined by an azimuth angle of 45 degrees. The four graphs of FIG. **10** show the distributions of transmission intensities on the four planes **I, II, III** and **IV,** respectively. Also, each of these graphs shows results in three viewing directions defined by polar angles of zero degrees (i.e., front direction), 45 degrees and 60 degrees, respectively.

It can be seen that in the domain lines appearing at the left end of Graph I, at the right end of Graph II, at the right end of Graph III, and at the left end of Graph IV, the behavior of the transmission intensity changes significantly according to the polar angle (particularly in Graph III). That is to say, the location with the minimum transmission intensity changes with the polar angle. For example, the transmission intensity in the front viewing direction (defined by a polar angle of zero degrees) is local minimum, whereas the transmission intensities at the polar angles of 45 and 60 degrees are local maximum. If the transmission intensity changes according to the polar angle in this manner, the viewing angle characteristic deteriorates. Among other things, the viewing angle dependence of γ characteristic deteriorates significantly to cause a phenomenon called "whitening".

By providing opaque portions that can selectively shield at least respective portions of the domain lines, produced in the edge portions of the pixel electrode, from incoming light, such deterioration in viewing angle characteristic can be reduced. Also, those domain lines are produced in the edge portions when the tilt directions of the liquid crystal molecules around the center of the liquid crystal layer are defined as described above with respect to the edges of the electrode. That is why the domain lines may also be produced in a normal pixel region with no multi-domain structures. For that reason, to minimize the deterioration in viewing angle characteristic due to the production of domain lines in the edge portions of the pixel electrode, such opaque portions for selectively shielding at least respective portions of the domain lines are preferably provided, no matter whether the multi-domain structure should be formed or not.

The dark lines formed around the center of the pixel region (e.g., crossed lines **CL1**) are not always misalignment and do not have to be shielded on purpose. However, if an opaque member needs to be arranged within the pixel region, the opaque member is preferably arranged to hide these dark lines because the effective aperture ratio of the pixel (i.e., the optical efficiency) can be increased in that case.

Hereinafter, preferred embodiments of opaque portions will be described specifically. Each of the opaque portions to be described below may be used either by itself or in combination with any other opaque portion.

A TFT LCD usually includes an opaque member. For example, a TFT substrate includes a gate bus line, a source bus line, a drain extension line and a storage capacitor line (which will be referred to herein as a "CS bus line"). Also, a CF substrate includes a black matrix to shield the surrounding areas of color filters that are arranged so as to overlap with pixel regions. The opaque portions for selectively shielding at least portions of the domain lines may be defined by using these opaque members. Furthermore, to minimize the decrease in optical efficiency caused by the opaque member arranged within the pixel region, the opaque member is preferably arranged so as to hide the dark area produced between adjacent liquid crystal domains.

Hereinafter, an exemplary pixel structure for a liquid crystal display device according to the present invention will be described. In the drawings, any pair of components shown in multiple drawings and having substantially the same function is identified by the same reference numeral. And once a component has been described, the description of its counterpart will be omitted herein to avoid redundancies. Also, in a number of pixels that are arranged in columns and rows so as to form a matrix pattern, the structure of a pixel located at an intersection between an m^{th} row and an n^{th} column will be described. It should be noted that a row corresponds to an arrangement of pixels along a gate bus line (or scan line), while a column corresponds to an arrangement of pixels along a source bus line (or signal line). Typically, rows are defined in the horizontal direction on the display screen, while columns in the vertical direction on the display screen.

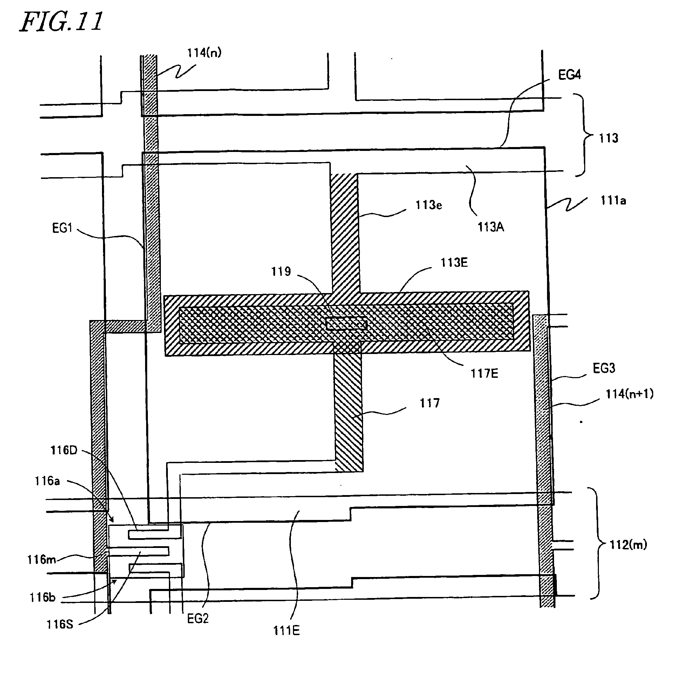

The opaque portions may be defined by using at least portions of the source bus line **114**, the CS bus line **113**, the drain extension line **117** and the gate bus line **112** as shown in FIG. 11, for example. In the following description, an m^{th} gate bus line **112** will be referred to herein as a "gate bus line **112(m)**" and an n^{th} source bus line **114** will be referred to herein as a "source bus line **114(n)"**.

The pixel region shown in FIG. **11** illustrates a subpixel with the multipixel structure disclosed in Japanese Patent Application Laid-Open Publication No. 2004-62146. The following description will be focused on the structure of the upper one of the two subpixel regions that has the subpixel electrode **111a.**

The sub-pixel electrode **111a** is connected to the drain electrode **116D** of the TFT **116** and is arranged so as to partially overlap with the source bus line **114,** the gate bus line **112** and the **CS** bus line **113** with an interlayer dielectric film (not shown) of resin interposed between them. Also, at the center of the sub-pixel electrode **111a,** a storage capacitor **CS** is formed by an extended portion **117E** of the drain extension line **117,** an extended portion **113E** of the CS bus line **113** and an insulating layer (e.g., a gate insulating layer) between them.

The multipixel structure shown in FIG. **11** has the following features.

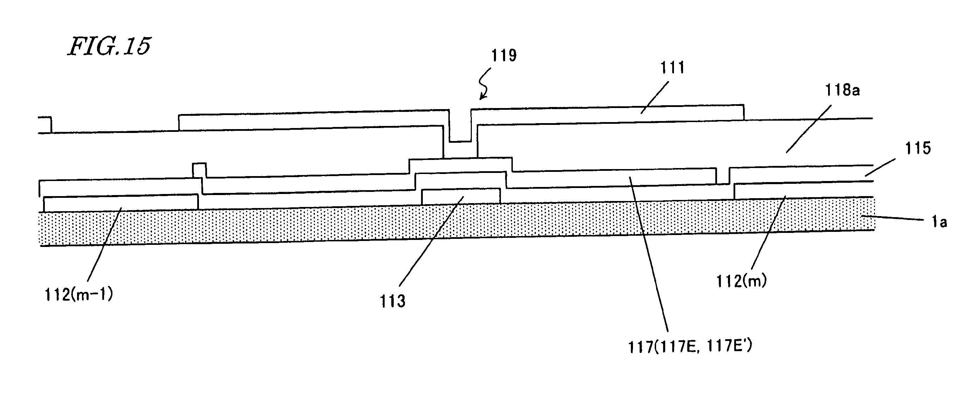

The conventional pixel electrode is divided into two subpixel electrodes, which are connected to the same source bus line **114** by way of their associated TFTs **116a** and **116b** (i.e., two TFTs in total). The ON and OFF states of the two TFTs **116a** and **116b** are controlled through the common gate bus line **112**. The two TFTs **116a** and **116b** share a semiconductor layer **116m,** a source electrode **116S,** and a gate electrode (gate bus line **112**) in common. And the respective drain electrodes **116D** of the two TFTs are electrically connected to their associated subpixel electrodes. The drain electrode **116D** of the TFT **116a** and the subpixel electrode **111a** are electrically connected together by connecting the drain extension line **117**, extending from the drain electrode 116D, to the subpixel electrode **111a** in a contact hole **119** that has been cut through an interlayer dielectric film (which is not shown in FIG. **11** but is identified by the reference numeral **118a** in FIG. **15**).

Each subpixel electrode (which is the upper subpixel electrode **111a** in FIG. 11 with the lower subpixel electrode not shown there), the liquid crystal layer, and a counter electrode (common electrode) that faces these electrodes with the liquid crystal layer interposed between them form a liquid crystal capacitor. Storage capacitors **CS** are formed electrically in parallel with the liquid crystal capacitors associated with the respective subpixel regions. As for the upper subpixel, one of the two electrodes that form the storage capacitor (i.e., the storage capacitor electrode) is defined by the extended portion **117E** of the drain extension line **117** that is connected to the drain **116D** of the same TFT **116a** as the subpixel electrode **111a,** while the other electrode (i.e., the storage capacitor counter electrode) is defined by the extended portion **113E** of the **CS** bus line **113** provided for the upper subpixel. Likewise, as for the lower subpixel, one of the two electrodes that form the storage capacitor (i.e., the storage capacitor electrode) is defined by the extended portion (not shown) of the drain extension line (not shown) that is connected to the drain (not shown) of the same TFT **116b** as the lower subpixel electrode (not shown), while the other electrode (i.e., the storage capacitor counter electrode) is defined by the extended portion (not shown) of the CS bus line (not shown) provided for the lower subpixel.

The **CS** bus lines **113** are provided electrically independently of each other for the two subpixels. For example, if the storage capacitor counter voltage supplied to the storage capacitor belonging to one subpixel through the **CS** bus line **113** rises after the TFT **116a** has been turned OFF, the storage capacitor counter voltage supplied to the storage capacitor belonging to the other subpixel through the **CS** bus line **113** falls after the TFT **116b** has been turned OFF. If (the magnitudes and/or the directions of) the storage capacitor counter voltages of the storage capacitors belonging to the respective subpixels are changed differently after their associated TFTs have been turned OFF, different effective voltages will be applied to the respective liquid crystal layers of the two subpixels. As a result, the two subpixels can present two different luminances (one of which is relatively high and the other of which is relatively low) with respect to the display signal voltage supplied through the source bus line **114.** Consequently, the viewing angle dependence of the r characteristic can be reduced.

The sub-pixel region shown in FIG. **11** has a multi-domain structure similar to that of the pixel region **10** described above. That is to say, domain lines are produced near the edge portions **EG1, EG2, EG3** and **EG4** of the sub-pixel electrode and crossed dark lines are produced at the center of the sub-pixel region.

The opaque portions for selectively shielding at least portions of the domain lines produced near the edge portions **EG1** and **EG3** may be formed by bending the source bus line **114** in a direction that crosses its length direction (the vertical direction), i.e., toward the sub-pixel electrode. Optionally, the opaque portions may also be formed by locally increasing the width of the source bus line **114.** However, the opaque portions are preferably formed by bending the source bus line because the stray capacitance might increase if the source bus line had an increased width.

The domain line produced in the edge portion **EG2** may be shielded by increasing the width of overlap between the edge portion of the sub-pixel electrode **111a** and the gate bus line **112**. The overlap width may be increased either by partially increasing the width of the sub-pixel electrode **111a** or the gate bus line **112** (e.g., by providing the broadened portion **111E** of the subpixel electrode **111a** shown in FIG. **11**) or by bending the gate bus line **112** in a direction that crosses its length direction (i.e., the horizontal direction).

The domain line produced in the edge portion **EG4** may be shielded by increasing the width of overlap between the edge portion of the sub-pixel electrode **111a** and the **CS** bus line 113. The overlap width may be increased either by partially increasing the width of the sub-pixel electrode **111a** or the **CS** bus line **113** (e.g., by providing the broadened portion **113A** of the **CS** bus line **113** shown in FIG. **11**) or by bending the **CS** bus line **113** in a direction that crosses its length direction (i.e., the horizontal direction).

The opaque portions for selectively shielding at least portions of the dark areas produced in the boundary areas between the liquid crystal domains may be formed by respective extended portions **113e** and **113E** of the **CS** bus line **113** and the drain extension line **117** and its extended portion **117E.** By using the storage capacitor **CS** in the pixel as an opaque portion in this manner, the extra decrease in optical efficiency can be minimized.

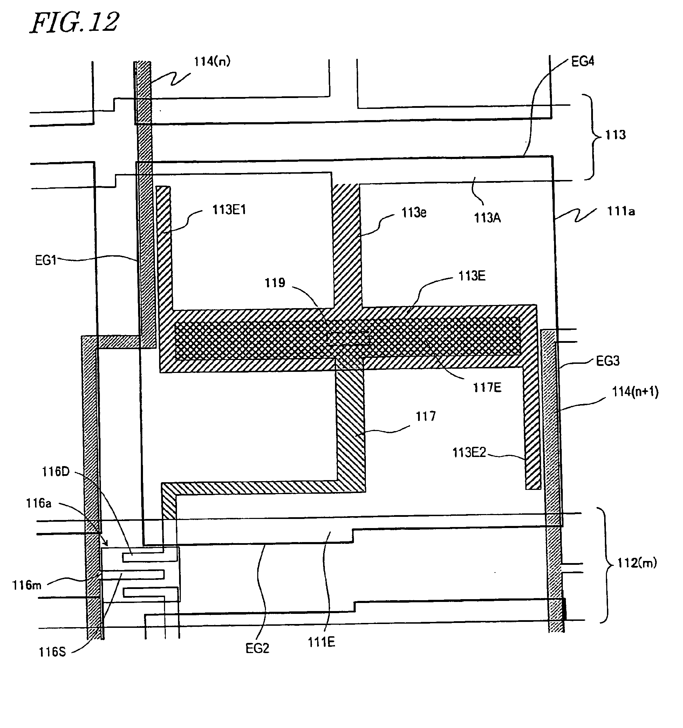

Alternatively, the **CS** bus line **113** may have not only the extended portions **113e** and **113E** for shielding the crossed dark lines at the center of the pixel region but also additional extended portions **113E1** and **113E2** for shielding the domain lines produced in the edge portions **EG1** and **EG2,** respectively, as shown in FIG. **12****.**

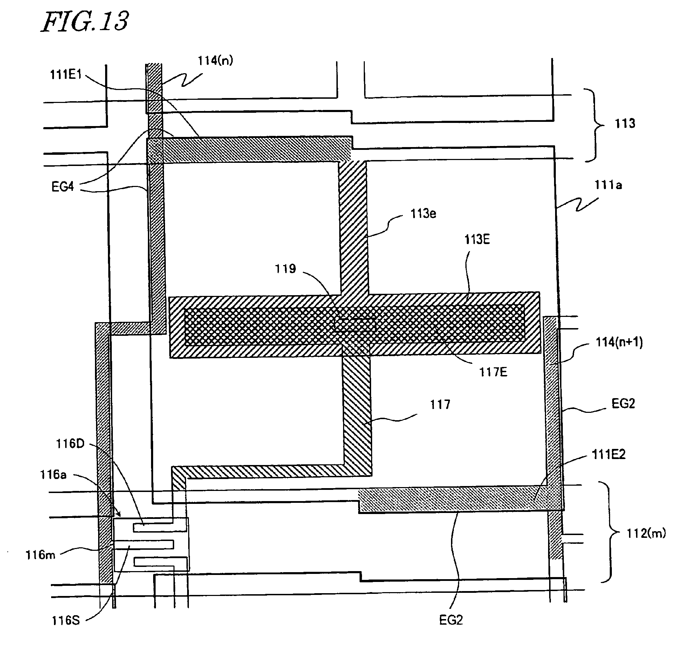

If a multi-domain structure similar to that of the pixel region **30** shown in portion **(a)** of FIG. **3** is formed for the sub-pixel region, then the arrangement shown in FIG. **13** may be adopted, for example.

Specifically, the domain line **(DL4(H)** shown in portion **(a)** of FIG. **3**) produced in the horizontal part of the edge portion **EG4** may be shielded by increasing the width of overlap between the CS bus line **113** and the sub-pixel electrode **111a.** The width of overlap can be increased by partially increasing the width of the sub-pixel electrode **111a** such that an extended portion **111E1** is formed. On the other hand, the domain line **(DL2(H)** shown in portion **(a)** of FIG. **3**) produced in the horizontal part of the edge portion **EG2** may be shielded by increasing the width of overlap between the gate bus line **112** and the sub-pixel electrode **111a.** The width of overlap can be increased by partially increasing the width of the sub-pixel electrode **111a** such that an extended portion **111E2** is formed. The vertical parts of the edge portions **EG2** and **EG4 (DL2(V)** and **DL4(V)** shown in portion **(a)** of FIG. 3) may be shielded by the bent portions of the source bus line **114** as in the example described above.

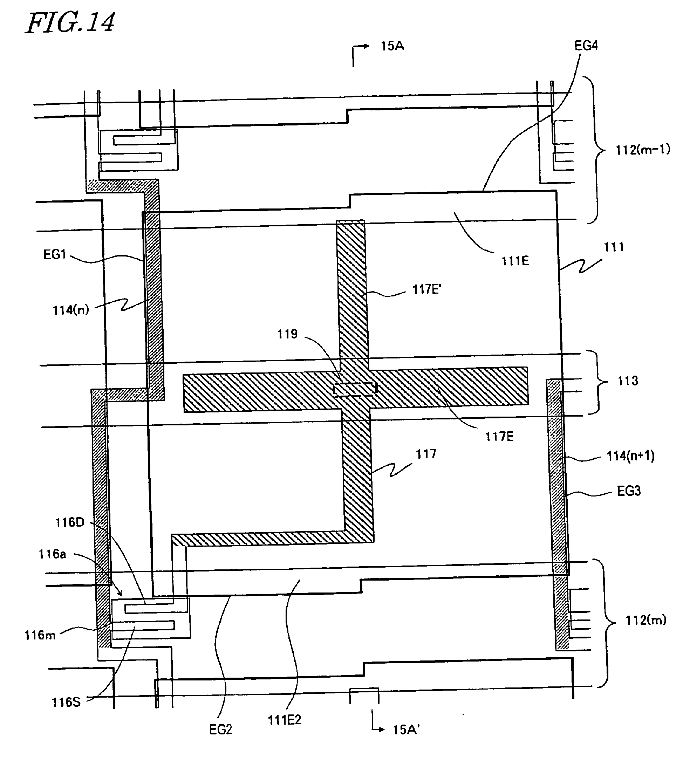

If a multi-domain structure similar to that of the pixel region **10** is adopted, the opaque portions for shielding the dark areas produced in the boundary areas between the liquid crystal domains may be defined by the extended portions **117E** and **117E'** of the drain extension line **117** as shown in FIG. **14**. The extended portion **117E** faces the **CS** bus line **113** to form a storage capacitor.

FIG. **15** is a cross-sectional view of the structure shown in FIG. **14** as viewed on the plane **15A-15A'** shown in FIG. **14****.** As shown in FIG. **15**, the drain extension line **117** and the gate bus line **112** interpose a gate insulating film **115** between them. Thus, leakage is less likely to be produced between the drain extension line **117** and the gate bus line **112** because these belong to two separate layers. A normal pixel with no multipixel structure is illustrated in FIG. **14****.** When this arrangement is applied to a multipixel structure, even if a **CS** bus line **113** is arranged in place of the gate bus line **112** in the upper part of FIG. **14****,** the opaque portion may also be formed to hide the central cross lines by the extended portions **117E** and **117E**' of the drain extension line **117** as shown in FIG. **14**, too. The **CS** bus line **113** is made of the same conductive layer (which is typically a metal layer) as the gate bus line **112.** That is why leakage is less likely to be produced between the drain extension line **117** and the **CS** bus line **113**. That is to say, the vertical part of the opaque portion to form the cross and the horizontal part of the opaque portion to shield the horizontal edge portion are preferably made of two different layers. By adopting such an arrangement, the leakage failures can be reduced compared to the configuration disclosed in FIG. **60** of Patent Document No. 1.

In the pixel structure shown in FIG. **15**, a relatively thick interlayer dielectric film **118a** of a photosensitive resin, for example, is interposed between the pixel electrode **111** and the source bus line **114.** That is why even if the pixel electrode **111** (or the subpixel electrode **111a)** and the source bus line **114** (and the gate bus line **112)** are stacked one upon the other as shown in FIG. **14****,** the capacitance produced between the pixel electrode **111** and the source bus line **114** can be reduced sufficiently. Consequently, the voltage at the pixel electrode **111** never varies due to the voltage (i.e., signal voltage) on the source bus line **114** by way of the capacitance. That is to say, by adopting the pixel structure shown in FIG. **15** in which the pixel electrode **111** and the source bus line **114** are stacked one upon the other, the aperture ratio of the pixel can be increased.

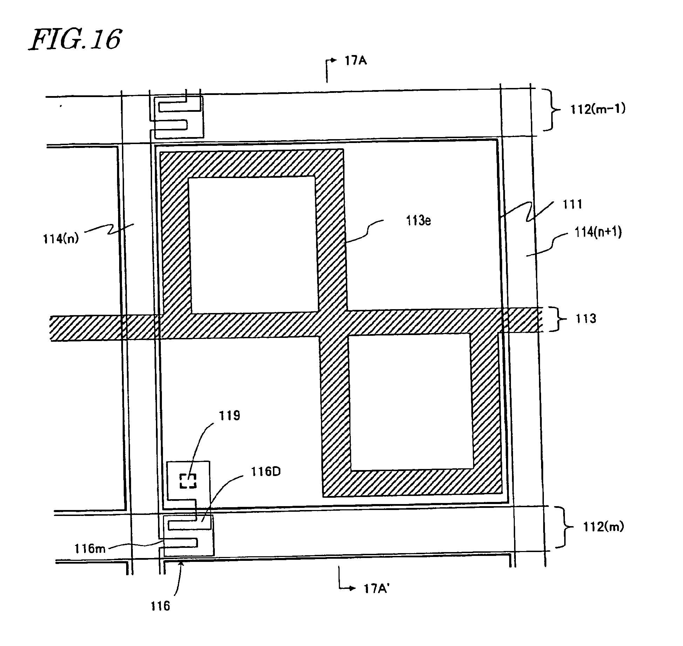

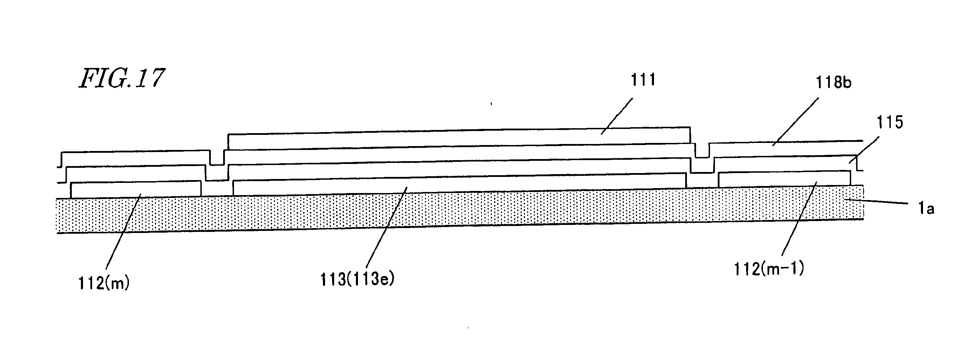

Alternatively, the domain lines produced in the edge portions and the crossed dark lines produced around the center of the pixel region may be shielded by the extended portion **113e** of the **CS** bus line **113** as shown in FIGS. **16** and 17. In the arrangement illustrated in FIGS. **16** and **17****,** a relatively thin interlayer dielectric film **118b** of an inorganic material such as SiNₓ, for example, is provided between the pixel electrode **111** and the source bus line **114.** In this arrangement, to prevent the voltage at the pixel electrode **111** from being affected by the voltage (i.e., signal voltage) on the source bus line **114,** the pixel electrode **111** and the bus line **114** are arranged so as not to overlap each other. This arrangement does not contribute to increasing the aperture ratio of a pixel but can simply the manufacturing process because a relatively thin inorganic insulating film can be used as the interlayer dielectric film **118b.**

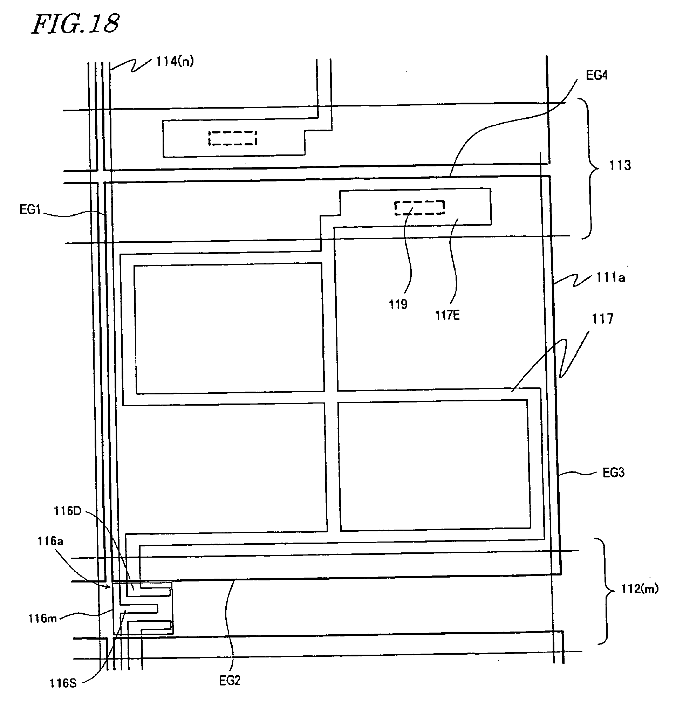

As another alternative, the domain lines produced in the edge portions and the crossed dark lines produced around the center of the pixel region may also be shielded by extending the drain extension line **117** as shown in FIG. **18****.** Since the drain extension line **117** belongs to a different layer from that of the gate bus line **112** and the **CS** bus line **113** as described above, leakage failures are less likely to occur between them. A sub-pixel region with a multipixel structure is illustrated in FIG. **18**. However, this structure is equally applicable for use in a normal pixel region, too.

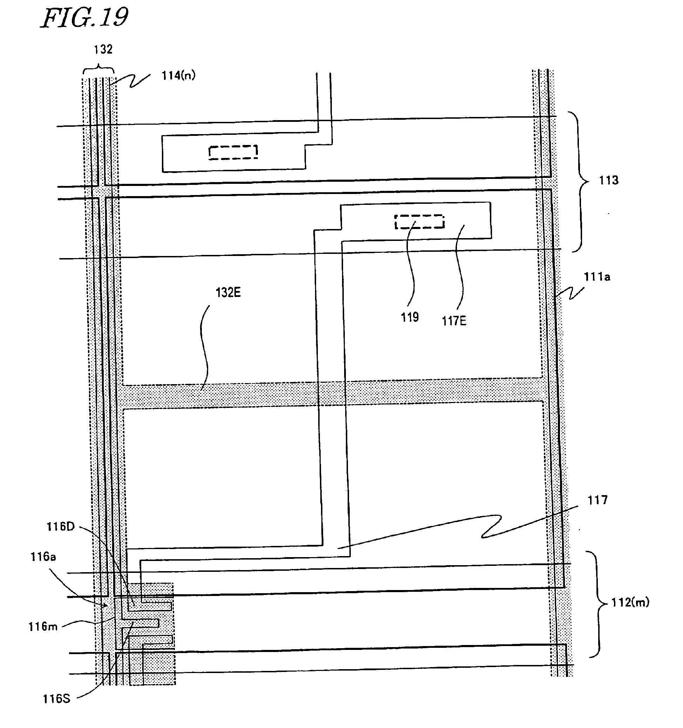

In each of the examples described above, the opaque portions are defined by using the opaque members arranged on the TFT substrate. If necessary, however, part or all of the opaque portions may be located on the **CF** substrate. For example, opaque portions with relatively broad widths (e.g., the opaque portions for shielding the domain lines produced in the edge portions parallel to the vertical direction and the opaque portion for shielding the crossed dark lines produced around the center of the pixel region) may be defined by the black matrix layer **132** on the **CF** substrate as shown in FIG. **19**. In this example, the horizontally extending portion of the crossed dark lines around the center of the pixel is supposed to be shielded entirely by the extended portion **132E** of the black matrix layer **132**. Alternatively, part of that portion may be shielded by the black matrix layer **132** and the other part may be shielded by the drain extension line **117.** Still alternatively, any of the shielding structures and this arrangement may be combined appropriately.

### Intersection

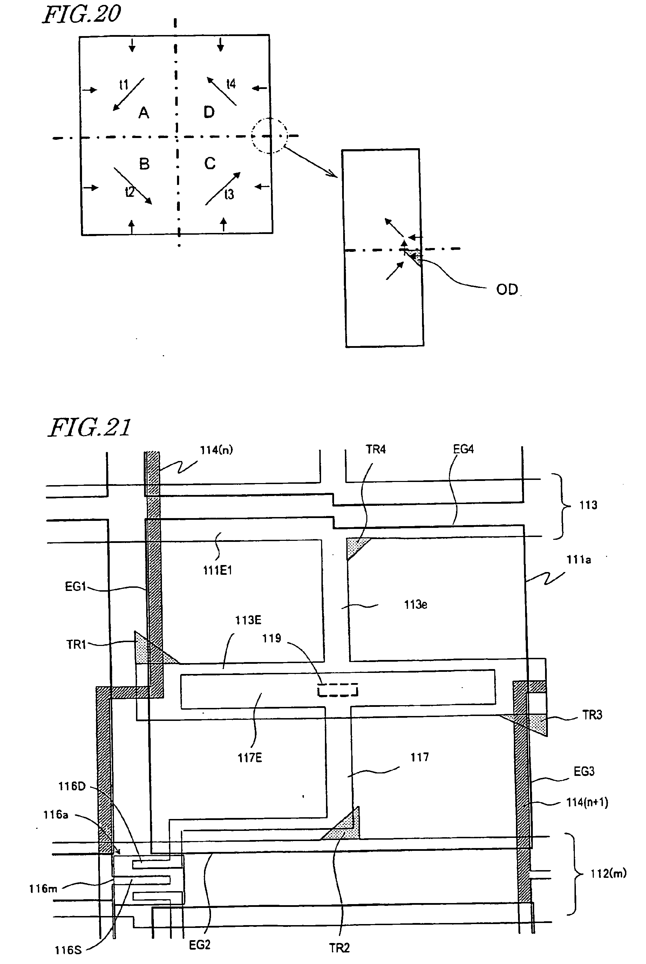

The present inventors discovered that at the intersections **OD** between the domain lines produced in the edge portions and the boundary areas between adjacent liquid crystal domains, the liquid crystal molecules had particularly inconsistent orientations and noticeably low response speeds as shown in FIG. **20****.** For that reason, in an application that pays much attention to moving picture display performance, those areas surrounding the intersections **OD** where the liquid crystal molecules have inconsistent orientations are preferably shielded.

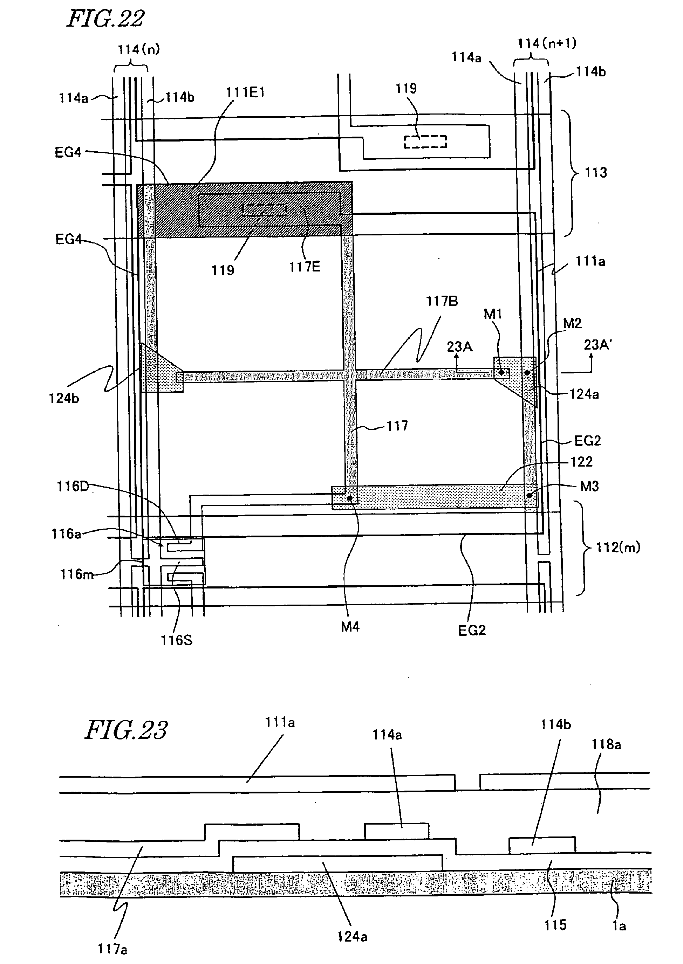

Those intersections **OD** are preferably shielded by providing extensions **TR1, TR2, TR3** and **TR4** that protrude out of the opaque portions for shielding the domain lines produced in the edge portions and the opaque portions for shielding the boundary area between adjacent liquid crystal domains as shown in FIG. **21**. Specifically, the extensions **TR1** and **TR3** are extended from the **CS** bus line extended portion **113E**, the extension **TR2** is extended from the gate bus line **112**, and the extension **TR4** is extended from the **CS** bus line **113.** If necessary, it is naturally possible to shield only the intersections **OD** selectively. The extensions **TR1** through TR4 shown in FIG. **22** have an almost triangular shape. However, the extensions may have any other shape as long as the optical efficiency (or aperture ratio) does not decrease unnecessarily. In view of this consideration, the extensions preferably have such a triangular shape as shown in FIG. **21****.**

Also, in the LCD manufacturing process of the preferred embodiment described above, at least the substrate with the opaque portions is preferably irradiated with light (typically an ultraviolet ray) for the purpose of photo-alignment treatment. The opaque portions described above are provided in areas where misalignment may arise in the multi-domain structure. That is why if the opaque portions were provided for the other substrate to face the substrate that has been irradiated with light to define the multi-domain structure, then an alignment error should be considered when those substrates are bonded together and the size of the opaque portions should be increased excessively, which is not beneficial. Also, the substrate is preferably irradiated with light that has come from a direction in which the light is not affected by the unevenness on the surface of the substrate. For example, if the CF substrate is irradiated with light, the light preferably comes from the column direction. Then, no shadow areas would be produced by the black matrix that is arranged between the rows.

### Islanded opaque portions that use gate metal layer

In the liquid crystal display device of the preferred embodiments described above, the opaque member on the TFT substrate is made of a circuit element arranged on the TFT substrate such as a gate bus line, a source bus line, a drain extension line or a CS bus line. However, the present invention is in no way limited to such a specific preferred embodiment. As will be described later, if islanded opaque portions, made of the same layer as the gate bus line, are used, then the opaque portions will achieve the effects of not serving as a capacitive component such as a gate-drain parasitic capacitance **Cgd** and providing a redundant structure that can repair a disconnection, if any, on the drain extension line.

In the following description, the layer made of the same material as the gate bus line will be referred to herein as a "gate metal layer", which means a metal layer deposited on the substrate to make a gate bus line. The gate metal layer does not have to be a single layer of a metallic material but may also be a conductive layer made of a non-metallic material such as doped polysilicon or a stack of such layers. For example, the CS bus line may be made of the gate metal layer. That is to say, the gate bus line and the CS bus line can be formed at the same time by etching the gate metal layer into a predetermined pattern. In the following example, not only the gate bus line and CS bus line but also islanded opaque portions are supposed to be made of the gate metal layer. As used herein, the "islanded opaque portion" means an electrically isolated opaque portion that is not connected to any other circuit component. If the islanded opaque portions are used to repair the drain extension line, however, the opaque portions are connected to either the drain extension line or the source bus line at the repaired pixels as will be described later.

FIGS. **22** and **23** schematically illustrate still another exemplary pixel structure, including islanded opaque portions made of a gate metal layer, for a liquid crystal display device according to the present invention. Specifically, FIG. **22** is a plan view and FIG. **23** is a cross-sectional view thereof as viewed on the plane **23A-23A'** shown in FIG. **22****.**

Just like the pixel shown in FIG. **13****,** the pixel shown in FIG. **22** has the same multi-domain structure as the pixel region **30** shown in FIG. **3(a)**. That is to say, supposing the upper right domain of the quadruple pixel is the first quadrant, four liquid crystal domains, namely, Liquid Crystal Domain A (with a tilt direction of approximately 225 degrees), Liquid Crystal Domain D (with a tilt direction of approximately 135 degrees), Liquid Crystal Domain C (with a tilt direction of approximately 45 degrees), and Liquid Crystal Domain B (with a tilt direction of approximately 315 degrees), are arranged in this order from the first quadrant through the fourth quadrant.

At least a part of the central opaque portion for selectively shielding at least a portion of the crossed dark area, which is defined in the boundary area where each of the four liquid crystal domains is adjacent to another one of the liquid crystal domains, is defined by at least a portion of the drain extension line **117**. In this example, one end of the drain extension line **117** is connected to the drain electrode **116D** of the TFT **116a,** while the other end thereof is connected to the subpixel electrode **111a** at a contact hole **119** that has been bored through the insulating layer (i.e., the interlayer dielectric film **118a** shown in FIG. **23**) that is interposed between the drain extension line **117** and the subpixel electrode **111a.** At that other end, the extended portion **117E** of the drain extension line is located and overlaps with the CS bus line with the gate insulating film **115** interposed between them, thereby forming a storage capacitor. The drain extension line **117** includes a trunk that leads from the drain electrode **116D** of the TFT **116a** to the contact hole 119 and branches **117B** diverging from the trunk. The vertical part of the central opaque portion that shields the crossed dark area from incoming light is mainly defined by the trunk of the drain extension line **117**, while the horizontal part of the central opaque portion is mainly defined by the branches **117B** of the drain extension line **117.**

As in the pixel shown in FIG. **13**, the domain line (i.e., DL4(H) shown in FIG. **3(a)****)** produced in the horizontal part of the edge portion **EG4** may be shielded by increasing the width of overlap between the **CS** bus line **113** and the sub-pixel electrode **111a.** The overlap width may be increased by forming the extended portion **111E1** with the width of the sub-pixel electrode **111a** partially increased. On the other hand, the domain line (i.e., DL2(H) shown in FIG. **3(a)**) produced in the horizontal part of the edge portion **EG2** is shielded by the islanded opaque portion **122** made of the gate metal layer unlike the pixel shown in FIG. **13****.** In the pixel shown in FIG. **13****,** the extended portion **111E2** is formed with the width of the subpixel electrode **111a** partially increased, thereby increasing the width of overlap between the gate bus line **112** and the subpixel electrode **111a** and shielding the domain line produced in the horizontal part of the edge portion **EG2.** For that reason, if the arrangement shown in FIG. **13** is adopted, the gate-drain parasitic capacitance **Cgd** will increase. On the other hand, if the arrangement shown in FIG. **22** is adopted, Cgd will not increase even with the opaque portions. In the following description, such an opaque portion that shields at least a part of the edge portion (or the domain line produced inside the edge portion) from incoming light will be referred to herein as an "edge shielding portion". It should be noted that the islanded opaque portion **122** shown in FIG. **22** has a part that overlaps with the trunk portion that defines the central opaque portion of the drain extension line **117** and that part also functions as a part of the central opaque portion.

As in the pixel shown in FIG. **13**, the vertical parts of the edge portions **EG2** and **EG4** (i.e., DL2(V) and DL4(V) shown in FIG. **3(a)****)** are shielded by the source bus lines **114.** In the pixel shown in FIG. **22**, however, each of the source bus lines **114** has a branched structure with two branches **114a** and **114b**, and each edge shielding portion shields the vertical part of its associated edge portion **EG2** or **EG4** using an associated one of the two branches. More specifically, the branch **114b** of the source bus line **114 (n)** is arranged inside of the edge portion **EG4** of the subpixel electrode **111a** and overlaps with the subpixel electrode **111a.** Likewise, the branch **114a** of the source bus line **114(n+1)** is arranged inside of the edge portion **EG2** of the subpixel electrode **111a** and overlaps with the subpixel electrode **111a.** In this case, the source bus line **114(n+1)** is a source bus line of the next stage, which belongs to the next column of pixels for the source bus line **114 (n)** of the current stage, to which the subpixel electrode **111a** of the given pixel is connected via the TFT **116a.**

As already described with reference to FIG. **20**, the pixel structure shown in FIG. **22** further includes an opaque portion that shields, from incoming light, an area where a domain line produced in an edge portion intersects with the boundary area of the adjacent liquid crystal domain (which will be referred to herein as an "intersection area shielding portion"). The intersection area shielding portion **124a** and **124b** shown in FIG. **22** are also islanded opaque portions made of the gate metal layer. As already described with reference to FIG. **15**, if the central opaque portion is defined by the drain extension line **117**, leakage rarely occurs between the gate bus line **112** and the **CS** bus line **113**. However, since the drain extension line **117** and the source bus line **114** are made of the same layer, leakage will occur easily between the drain extension line **117** and the source bus line **114,** which is a problem. That is to say, in FIG. **22**, if both ends of the branch **117B** of the drain extension line **117** for shielding the horizontal part of the central opaque portion were too close to the source bus lines **114(n**) and **114(n+1),** then leakage would occur. Thus, by providing the islanded opaque portions **124a** and **124b** as portions of the horizontal part of the central opaque portion, a sufficient gap can be left between the ends of the branch **117B** of the drain extension line **117** and the source bus lines **114(n)** and **114(n+1),** thus preventing such leakage.

In the pixel structure shown in FIG. **22**, the islanded opaque portions **122** and **124a** form a redundant structure that will repair a disconnection, if any, on the drain extension line **117.**

The islanded opaque portion **122** includes a portion that overlaps with the drain extension line **117** and a portion that overlaps with the branch **114a** of the source bus line **114(n+1).** Likewise, the islanded opaque portion **124a** includes a portion that overlaps with (the branch **117B** of) the drain extension line **117** and a portion that overlaps with the branch **114a** of the source bus line **114(n+1).**

Thus, if a disconnection has occurred anywhere on the drain extension line **117** between the drain electrode **116D** and the branch, then the points M1, **M2, M3** and **M4** shown in FIG. **22** are irradiated with a laser beam (such as the second harmonic of a YAG laser beam with a wavelength of **532** nm), thereby fusing and connecting together the branch **117B** of the drain extension line **117** and the islanded opaque portion **124a** at the point **M1,** the branch **114a** of the source bus line **114(n+1)** and the islanded opaque portion **124a** at the point **M2,** the branch **114a** of the source bus line **114(n+1)** and the islanded opaque portion **122** at the point **M3,** and the trunk of the drain extension line **117** and the islanded opaque portion **122** at the point **M4,** respectively. In this manner, an electrical path that leads from the point **M1** to the point **M4** is formed. If the branch **114a** of the source bus line **114(n+1)** is cut off the source bus line **114(n+1)** outside of the points **M2** and **M3,** then the disconnection of the drain extension line **117** can be repaired with the path. The branch **114a** of the source bus line **114** may be cut off by being irradiated with a laser beam (such as the fourth harmonic of a YAG laser beam with a wavelength of 266 nm).

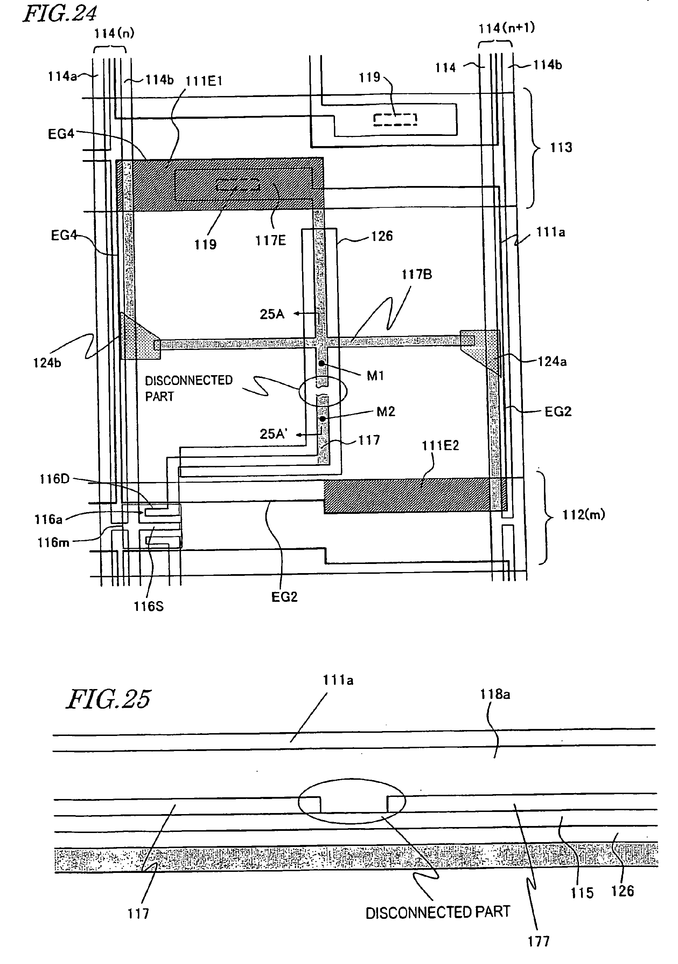

Next, yet another exemplary pixel structure, including islanded opaque portions made of a gate metal layer, for a liquid crystal display device according to the present invention will be described with reference to FIGS. **24** and **25**. Specifically, FIG. **24** is a plan view and FIG. **25** is a cross-sectional view thereof as viewed on the plane **25A-25A'** shown in FIG. **24****.**

Unlike the pixel structure shown in FIGS. **22** and **23****,** the pixel structure shown in FIGS. **24** and **25** includes another islanded opaque portion **126.** As in the pixel structure shown in FIG. **13****,** the edge shielding portion for shielding the horizontal part of the edge portion **EG2** from incoming light is defined by forming the extended portion **111E2** with the width of the subpixel electrode **111a** partially increased and by increasing the width of overlap between the gate bus line **112** and the subpixel electrode **111a.** Alternatively, the island opaque portion **122** may also be provided as shown in FIG. **22****.**

The islanded opaque portion **126** overlaps with a portion of the drain extension line **117** that leads from the drain electrode **116D** of the TFT **116a** to the contact hole **119** (i.e., the trunk) with the gate insulating film **115** interposed between them, and has a broader width than the drain extension line **117.** That is why if a disconnection has occurred anywhere on the drain extension line **117** between the drain electrode **116D** and the branch, then the points **M1** and **M2** on both sides of the disconnected portion may be irradiated with a laser beam (such as the second harmonic of a YAG laser beam with a wavelength of **532** nm) as schematically shown in FIG. **24**, thereby fusing and connecting together the drain extension line **117** and the islanded opaque portion **126** at the points **M1** and **M2** and repairing the disconnection. With this pixel structure shown in FIG. **24****,** the disconnection can be repaired more easily than with the pixel structure shown in FIG. **23****,** which is beneficial.

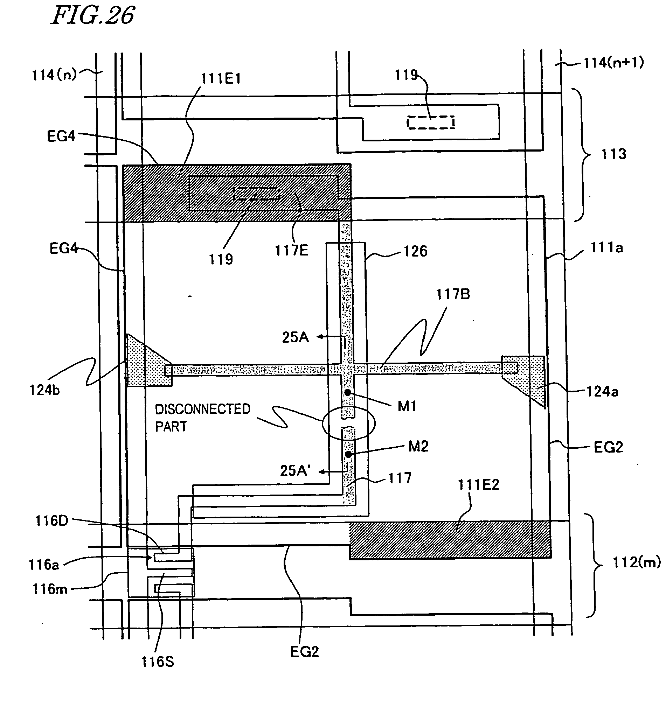

If the pixel structure shown in FIG. **24** is adopted, the source bus line **114** does not have to have branches to define a redundant structure but may be a single line as shown in FIG. **26****.**

Naturally, such an arrangement including islanded opaque portions made of a gate metal layer is applicable to not just the pixel structure (or multi-domain structure) illustrated in the drawings but also various other pixel structures as well. Furthermore, those shielding structures illustrated may also be used in combination as needed.

### Partial shielding

The liquid crystal display device of the preferred embodiment described above includes opaque portions for shielding edge portions with domain lines substantially entirely. However, the present invention is in no way limited to that specific preferred embodiment. To minimize the deterioration in viewing angle characteristic, the opaque portions are preferably arranged so as to shield the domain lines from incoming light entirely as described above. If the opaque portions were present, however, the optical efficiency (i.e., the effective aperture ratio of a pixel) would decrease. That is why the edge portions may be shielded partially to strike an adequate balance between the viewing angle characteristic and the optical efficiency.

Particularly if an arrangement in which the pixel electrode does not overlap with the source bus line as viewed perpendicularly to the substrate (see the cross-sectional view shown in FIG. **17**, for example) is adopted, the pixel aperture ratio decreases. For that reason, to avoid a significant decrease in pixel aperture ratio, the opaque areas are preferably as small as possible. If a relatively thick interlayer dielectric film **118a** of a photosensitive resin, for example, is interposed between the pixel electrode **111** and the source bus line **114** as shown in FIG. **15**, the capacitance produced between the pixel electrode **111** (or the subpixel electrode **111a)** and the source bus line **114** (and the gate bus line 112) can be reduced sufficiently even when the pixel electrode **111** (or the subpixel electrode **111a)** overlaps with the source bus line **114** (and the gate bus line **112**) as shown in FIGS. **14****,** **18****,** **19** and **21****.** That is why the voltage at the pixel electrode **111** (or the subpixel electrode **111a**) is not affected by the voltage (i.e., signal voltage) on the source bus line **114** by way of this capacitance. Consequently, by overlapping the pixel electrode **111** (or the subpixel electrode **111a**) and the source bus line **114** (and the gate bus line **112**) each other, the pixel aperture ratio can be increased.

On the other hand, if an arrangement in which the pixel electrode **111** does not overlap with the source bus line **114** (and the gate bus line **112**) is adopted as shown in the cross-sectional view of FIG. **17****,** then a relatively thin inorganic insulating film of SiNₓ, for example, may be used as the interlayer dielectric film **118b.** As a result, the manufacturing process can be simplified, which is advantageous. However, if such an arrangement in which the pixel electrode **111** does not overlap with the source bus line **114** is adopted, the pixel aperture ratio will decrease. For that reason, to achieve a sufficient display luminance, the opaque portions are preferably as small as possible.

The multi-domain structure applicable to the liquid crystal display device of the present invention is not limited to that specifically described above but may also be any of the multi-domain structures that have been described with reference to FIGS. **2** through **5**. Therefore, opaque portions for shielding at least portions of the domain lines produced in the edge portions and at least portions of the boundary areas at the center of the pixel region (or subpixel region) where liquid crystal domains are adjacent to each other may be formed by using at least partially at least one line to be selected from the group consisting of the gate bus line, source bus line, drain extension line, CS bus line, extended portion of the gate bus line and extended portion of the CS line on the TFT substrate according to the type of the multi-domain structure applied. Also, if necessary, a black matrix (BM) on the counter substrate (i.e., color filter substrate) may be used as well. The shielding structures could be easily modified or combined according to the type of the specific multi-domain structure in various manners other than those specifically described above as preferred embodiments of the present invention.

### INDUSTRIAL APPLICABILITY

A liquid crystal display device according to the present invention can be used effectively as a TV monitor or in any other application that requires high display quality.

## Claims

1. A liquid crystal display device comprising:
a vertical alignment liquid crystal layer (3);
a first substrate (1) and a second substrate (2), which face each other with the liquid crystal layer (3) interposed between them:
a first electrode (11), which is arranged on the first substrate (1) so as to face the liquid crystal layer (3); and
a second electrode (12), which is arranged on the second substrate (2) so as to face the liquid crystal layer (3);
wherein a pixel region (10) includes first, second, third and fourth liquid crystal domains (A, B, C, D) in which liquid crystal molecules (3a) are tilted in first, second, third and fourth directions (t₁, t₂, t₃, t₄), respectively, around the center of a plane, and
approximately at the middle of the thickness of the liquid crystal layer (3) in response to a voltage applied between the first and second electrodes, the first, second, third and fourth directions (t₁, t₂, t₃, t₄) being defined such that an angle formed between any two of the four directions is approximately equal to an integral multiple of 90 degrees, the first, second, third and fourth liquid crystal domains (A, B, C, D) being arranged in two columns and two rows so as to define a matrix pattern and to be adjacent to each other, and
wherein the first substrate (1) includes a TFT (116a), a gate bus line (112), a source bus line (114), a drain extension line (117), a storage capacitor line (113), and
wherein at least a portion of the drain extension line (117) defines at least a part of a central opaque portion that selectively shields a boundary area, where each of the first, second, third and fourth liquid crystal domains (A, B, C, D) contacts with another one of the liquid crystal domains (A, B, C, D), from incoming light, **characterized by**
at least one alignment film, which is arranged in contact with the liquid crystal layer (3) and defines pretilt directions determining the tilt directions (t₁, t₂, t₃, t₄),
wherein the first substrate (1) further includes at least one islanded opaque portion, which is made of the same layer as the gate bus line (112),
wherein the at least one islander opaque portion has a portion that overlaps with the drain extension line (117) with a gate insulating film (115) interposed between them,
wherein the portion overlapping with the drain extension line (117) is an edge shielding portion (122) for selectively shielding at least a part of a dark area from incoming light, the dark area being produced inside of the liquid crystal domains (A, B, C, D), and substantially parallel to an edge portion (EG1, EG2, EG3, EG4) of the first electrode (11), and looking darker than a gray scale level being presented by the pixel region (10) to a viewer located in front of the device.

2. The liquid crystal display device of claim 1, wherein the source bus line (114) has a branched structure with multiple branches (114a, 114b), and wherein the edge shielding portion (122) overlaps with one of the branches (114a, 114b) of the source bus line (114) with the gate insulating film (115) interposed between them.

3. The liquid crystal display device of one of claims I to 2, wherein the first substrate (1) further includes an insulating layer, which is arranged between the drain extension line (117) and the first electrode (11), and
wherein the drain extension line (117) includes an extended portion that overlaps with the storage capacitor line (113) with the gate insulating film (115) interposed between them, and
wherein the extended portion of the drain extension line (117) is connected to the first electrode (11) at a contact hole (119) that has been cut through the insulating layer, and
wherein another islanded opaque portion (126) includes a repairing islanded opaque portion that overlaps with a portion of the drain extension line (117) that leads from the TFT (116a) to the contact hole (119) with the gate insulating film (115) interposed between them and that has a broader width than the drain extension line (117).

4. A liquid crystal display device comprising:
a vertical alignment liquid crystal layer (3);
a first substrate (1) and a second substrate (2), which face each other with the liquid crystal layer (3) interposed between them;
a first electrode (11), which is arranged on the first substrate (1) so as to face the liquid crystal layer (3); and
a second electrode (12), which is arranged on the second substrate (2) so as to face the liquid crystal layer (3);
wherein a pixel region (10) includes first, second, third and fourth liquid crystal domains (A, B, C, D) in which liquid crystal molecules (3a) are tilted in first, second, third and fourth directions (t₁, t₂, t₃, t₄), respectively, around the center of a plane, and
approximately at the middle of the thickness, of the liquid crystal layer (3) in response to a voltage applied between the first and second electrodes, the first, second, third and fourth directions (t₁, t₂, t₃, t₄) being defined such that an angle formed between any two of the four directions is approximately equal to an integral multiple of 90 degrees, the first, second, third and fourth liquid crystal domains (A, B, C, D) being arranged in two columns and two rows so as to define a matrix pattern and to be adjacent to each other, and
wherein the first substrate (1) includes a TFT (116a), a gate bus line (112), a source bus line (114), a drain extension line (117), a storage capacitor line (113), and
wherein at least a portion of the drain extension line (117) defines at least a part of a central opaque portion that selectively shields a boundary area, where each of the first, second, third and fourth liquid crystal domains (A, B, C, D) contacts with another one of the liquid crystal domains (A, B. C. D), from incoming light,
wherein the first liquid crystal domain (A) is located close to at least a part of an edge of the first electrode (11), the part forming a first edge portion (EG 1) in which an azimuthal direction that is perpendicular to the part and that points toward the inside of the first electrode (11) defines an angle greater than 90 degrees with respect to the first direction (t₁):
the second liquid crystal domain (B) is located close to at least a part of another edge of the first electrode (11), the part forming a second edge portion (EG2) in which an azimuthal direction that is perpendicular to the part and that points toward the inside of the first electrode (11) defines an angle greater than 90 degrees with respect to the second direction (t₂);
the third liquid crystal domain (C) is located close to at least a part of another edge of the first electrode (11), the part forming a third edge portion (EG3) in which an azimuthal direction that is perpendicular to the part and that points toward the inside of the first electrode (11) defines an angle greater than 90 degrees with respect to the third direction (t₃);
the fourth liquid crystal domain (D) is located close to at least a part of another edge of the first electrode (11), the part forming a fourth edge portion (EG4) in which an azimuthal direction that is perpendicular to the part and that points toward the inside of the first electrode (11) defines an angle greater than 90 degrees with respect to the fourth direction (t₄); and
each of the first, second, third and fourth liquid crystal domains (A; B, C, D) is adjacent to another one of the liquid crystal domains (A; B, C, D),
**characterized by**
at least one alignment film, which is arranged in contact with the liquid crystal layer (3) and defines pretilt directions determining the tilt directions (t₁, t₂, t₃, t₄),
wherein the first substrate (1) further includes at least one islanded opaque portion, which is made of the same layer as the gate bus line (112),
wherein the at least one islanded opaque portion has a portion that overlaps with the drain extension line (117) with a gate insulating film (115) interposed between them,
wherein the portion overlapping with the drain extension line (117) is an intersection area shielding portion (124a, 124b) for shielding, from incoming light, an area where the boundary area in which each of the first, second, third and fourth liquid crystal domains (A, B. C, D) is adjacent to another one of the liquid crystal domains (A, B, C, D) intersects with a domain line produced inside any of the liquid crystal domains (A, B, C, D) and substantially parallel to one of the first, second, third and fourth edge portions (EG1, EG2. EG3, EG4), the domain line appearing darker than a gray scale level being presented by the pixel region (10) to a viewer located in front of the device.

5. The liquid crystal display device of claim 4, wherein the source bus line (114) has a branched structure with multiple branches (114a, 114b), and wherein the intersection area shielding portion (124a, 124b) further overlaps with one of the branches of the source bus line (114a) with the gate insulating film (115) interposed between them.

6. The liquid crystal display device of one of claims 4 to 5, wherein the first substrate (1) further includes an insulating layer, which is arranged between the drain extension line (117) and the first electrode (11), and
wherein the drain extension line (117) includes an extended portion (117E) that overlaps with the storage capacitor line (113) with the gate insulating film (115) interposed between them, and
wherein the extended portion (117E) of the drain extension line (117) is connected to the first electrode (11) at a contact hole (119) that has been cut through the insulating layer, and
wherein another islanded opaque portion includes a repairing islanded opaque portion (126) that overlaps with a portion of the drain extension line (117) that leads from the TFT (116a) to the contact hole (119) with the gate insulating film (115) interposed between them and that has a broader width than the drain extension line (117).

## Patentansprüche

1. Flüssigkristallanzeigeeinrichtung, die enthält:
eine senkrechte Flüssigkristallausrichtungsschicht (3);
ein erstes Substrat (1) und ein zweites Substrat (2), die einander gegenüberliegen, wobei die Flüssigkristallschicht (3) zwischen ihnen eingefügt ist;
eine erste Elektrode (11), die auf dem ersten Substrat (1) angeordnet ist, um der Flüssigkristallschicht (3) gegenüberzuliegen; und
eine zweite Elektrode (12), die auf dem zweiten Substrat (2) angeordnet ist, um der Flüssigkristallschicht (3) gegenüberzuliegen;
wobei ein Pixelbereich (10) eine erste, zweite, dritte und vierte Flüssigkristalldomäne (A, B, C, D) enthält, in denen die Flüssigkristallmoleküle (3a) jeweils in einer ersten, zweiten, dritten und vierten Richtung (t₁, t₂, t₃, t₄) um die Mitte einer Ebene geneigt sind, und
ungefähr in der Mitte der Dicke der Flüssigkristallschicht (3) in Antwort auf eine zwischen der ersten und der zweiten Elektrode angelegte Spannung, die erste, zweite, dritte und vierte Richtung (t₁, t₂, t₃, t₄) derart definiert sind, dass ein zwischen beliebigen zwei der vier Richtungen gebildeter Winkel ungefähr gleich einem ganzzahligen Vielfachen von 90 Grad ist, wobei die erste, zweite, dritte und vierte Flüssigkristalldomäne (A, B, C, D) in zwei Spalten und zwei Reihen angeordnet sind, um ein Matrixmuster zu definieren und aneinander angrenzend zu sein, und
wobei das erste Substrat (1) einen TFT (116a), eine Gate-Busleitung (112), eine Source-Busleitung (114), eine Drain-Verlängerungsleitung (117) und eine Speicherkapazitätsleitung (113) enthält, und
wobei mindestens ein Abschnitt der Drain-Verlängerungsleitung (117) mindestens einen Teil eines zentralen opaken Abschnitts definiert, der wahlweise einen Grenzbereich, in dem jede der ersten, zweiten, dritten und vierten Flüssigkristalldomäne (A, B, C, D) eine weitere Flüssigkristalldomäne (A, B, C, D) berührt, von einfallendem Licht abschirmt, **gekennzeichnet durch**
mindestens eine Ausrichtungsschicht, die in Kontakt mit der Flüssigkristallschicht (3) angeordnet ist und Vorneigungsrichtungen definiert, die die Neigungsrichtungen (t₁, t₂, t₃, t₄) definieren,
wobei das erste Substrat (1) ferner mindestens einen opaken Inselabschnitt enthält, der aus derselben Schicht wie die Gate-Busleitung (112) hergestellt ist,
wobei der mindestens eine opake Inselabschnitt einen Abschnitt besitzt, der die Drain-Verlängerungsleitung (117) überdeckt, wobei eine Gate-Isolierschicht (115) zwischen ihnen eingefügt ist,
wobei der die Drain-Verlängerungsleitung (117) überdeckende Abschnitt ein Kantenabschirmungsabschnitt (122) ist, um wahlweise mindestens einen Teil eines dunklen Bereichs von einfallendem Licht abzuschirmen, wobei der dunkle Bereich innerhalb der Flüssigkristalldomänen (A, B, C, D) erzeugt ist und im Wesentlichen parallel zu einem Kantenabschnitt (EG1, EG2, EG3, EG4) der ersten Elektrode (11) ist und dunkler als ein Graustufenpegel, der **durch** den Pixelbereich (10) einem sich vor der Vorrichtung befindenden Betrachter dargestellt wird, aussieht.

2. Flüssigkristallanzeigeeinrichtung nach Anspruch 1, wobei die Source-Busleitung (114) eine verzweigte Struktur mit mehreren Zweigen (114a, 1 14b) besitzt und wobei der Kantenabschirmungsabschnitt (122) einen der Zweige (114a, 114b) der Source-Busleitung (114) überdeckt, wobei die Gate-Isolierschicht (115) zwischen ihnen eingefügt ist.

3. Flüssigkristallanzeigeeinrichtung nach einem der Ansprüche 1 bis 2, wobei das erste Substrat (1) ferner eine Isolierschicht enthält, die zwischen der Drain-Verlängerungsleitung (117) und der ersten Elektrode (11) angeordnet ist, und
wobei die Drain-Verlängerungsleitung (117) einen erweiterten Abschnitt enthält, der die Speicherkapazitätsleitung (113) überdeckt, wobei die Gate-Isolierschicht (115) zwischen ihnen eingefügt ist, und
wobei der erweiterte Abschnitt der Drain-Verlängerungsleitung (117) mit der ersten Elektrode (11) an einem Kontaktloch (119), das durch die Isolierschicht geschnitten wurde, verbunden ist, und
wobei ein weiterer opaker Inselabschnitt (126) einen reparierenden opaken Inselabschnitt enthält, der einen Abschnitt der Drain-Verlängerungsleitung (117), die von dem TFT (116a) zu dem Kontaktloch (119) führt, überdeckt, wobei die Gate-Isolierschicht (115) zwischen ihnen eingefügt ist, und der eine größere Breite als die Drain-Verlängerungsleitung (117) aufweist.

4. Flüssigkristallanzeigeeinrichtung, die enthält:
eine senkrechte Flüssigkristallausrichtungsschicht (3);
ein erstes Substrat (1) und ein zweites Substrat (2), die einander gegenüberliegen, wobei die Flüssigkristallschicht (3) zwischen ihnen eingefügt ist;
eine erste Elektrode (11), die auf dem ersten Substrat (1) angeordnet ist, um der Flüssigkristallschicht (3) gegenüberzuliegen; und
eine zweite Elektrode (12), die auf dem zweiten Substrat (2) angeordnet ist, um der Flüssigkristallschicht (3) gegenüberzuliegen;
wobei ein Pixelbereich (10) eine erste, zweite, dritte und vierte Flüssigkristalldomäne (A, B, C, D) enthält, in denen die Flüssigkristallmoleküle (3a) jeweils in einer ersten, zweiten, dritten und vierten Richtung (t₁, t₂, t₃, t₄) um die Mitte einer Ebene geneigt sind, und
ungefähr in der Mitte der Dicke der Flüssigkristallschicht (3) in Antwort auf eine zwischen der ersten und der zweiten Elektrode angelegte Spannung, die erste, zweite, dritte und vierte Richtung (t₁, t₂, t₃, t₄) derart definiert sind, dass ein zwischen beliebigen zwei der vier Richtungen gebildeter Winkel ungefähr gleich einem ganzzahligen Vielfachen von 90 Grad ist, wobei die erste, zweite, dritte und vierte Flüssigkristalldomäne (A, B, C, D) in zwei Spalten und zwei Reihen angeordnet sind, um ein Matrixmuster zu definieren und aneinander angrenzend zu sein, und
wobei das erste Substrat (1) einen TFT (116a), eine Gate-Busleitung (112), eine Source-Busleitung (114), eine Drain-Verlängerungsleitung (117) und eine Speicherkapazitätsleitung (113) enthält, und
wobei mindestens ein Abschnitt der Drain-Verlängerungsleitung (117) mindestens einen Teil eines zentralen opaken Abschnitts definiert, der wahlweise einen Grenzbereich, in dem jede der ersten, zweiten, dritten und vierten Flüssigkristalldomäne (A, B, C, D) eine weitere Flüssigkristalldomäne (A, B, C, D) berührt, von einfallendem Licht abschirmt,
wobei sich die erste Flüssigkristalldomäne (A) in der Nähe von mindestens einem Teil einer Kante der ersten Elektrode (11) befindet, wobei der Teil einen ersten Kantenabschnitt (EG 1) bildet, in dem eine azimutale Richtung, die senkrecht zu dem Teil ist und in das Innere der ersten Elektrode (11) zeigt, einen Winkel definiert, der größer als 90 Grad in Bezug auf die erste Richtung (t₁) ist;
die zweite Flüssigkristalldomäne (B) sich in der Nähe von mindestens einem Teil einer weiteren Kante der ersten Elektrode (11) befindet, wobei der Teil einen zweiten Kantenabschnitt (EG2) bildet, in dem eine azimutale Richtung, die senkrecht zu dem Teil ist und in das Innere der ersten Elektrode (11) zeigt, einen Winkel definiert, der größer als 90 Grad in Bezug auf die zweite Richtung (t₂) ist;
die dritte Flüssigkristalldomäne (C) sich in der Nähe von mindestens einem Teil einer weiteren Kante der ersten Elektrode (11) befindet, wobei der Teil einen dritten Kantenabschnitt (EG3) bildet, in dem eine azimutale Richtung, die senkrecht zu dem Teil ist und in das Innere der ersten Elektrode (11) zeigt, einen Winkel definiert, der größer als 90 Grad in Bezug auf die dritte Richtung (t₃) ist;
die vierte Flüssigkristalldomäne (D) sich in der Nähe von mindestens einem Teil einer weiteren Kante der ersten Elektrode (11) befindet, wobei der Teil einen vierten Kantenabschnitt (EG4) bildet, in dem eine azimutale Richtung, die senkrecht zu dem Teil ist und in das Innere der ersten Elektrode (11) zeigt, einen Winkel definiert, der größer als 90 Grad in Bezug auf die vierte Richtung (t₄) ist; und
jede der ersten, zweiten, dritten und vierten Flüssigkristalldomäne (A, B, C, D) an eine weitere der Flüssigkristalldomänen (A, B, C, D) angrenzend ist,
**gekennzeichnet durch**
mindestens eine Ausrichtungsschicht, die in Kontakt mit der Flüssigkristallschicht (3) angeordnet ist und Vorneigungsrichtungen definiert, die die Neigungsrichtungen (t₁, t₂, t₃, t₄) definieren,
wobei das erste Substrat (1) ferner mindestens einen opaken Inselabschnitt enthält, der aus derselben Schicht wie die Gate-Busleitung (112) hergestellt ist,
wobei der mindestens eine opake Inselabschnitt einen Abschnitt besitzt, der die Drain-Verlängerungsleitung (177) überdeckt, wobei eine Gate-Isolierschicht (115) zwischen ihnen eingefügt ist,
wobei der die Drain-Verlängerungsleitung (117) überdeckende Abschnitt ein Kreuzungsbereichsabschirmungsabschnitt (124a, 124b) ist, um einen Bereich, in dem der Grenzbereich, in dem jede der ersten, zweiten, dritten und vierten Flüssigkristalldomänen (A, B, C, D) an eine weitere Flüssigkristalldomäne (A, B, C, D) angrenzt, eine innerhalb einer beliebigen Flüssigkristalldomäne (A, B, C, D) erzeugte und im Wesentlichen zu einem des ersten, zweiten, dritten und vierten Kantenabschnitts (EG1, EG2, Eg3, EG4) parallele Domänenleitung kreuzt, von einfallendem Licht abzuschirmen, wobei die Domänenleitung dunkler als ein Graustufenpegel, der **durch** den Pixelbereich (10) einem sich vor der Vorrichtung befindenden Betrachter dargestellt wird, erscheint.

5. Flüssigkristallanzeigeeinrichtung nach Anspruch 4, wobei die Source-Busleitung (114) eine verzweigte Struktur mit mehreren Zweigen (114a, 114b) besitzt und wobei der Kreuzungsbereichsabschirmungsabschnitt (124a, 124b) ferner einen der Zweige der Source-Busleitung (114a) überdeckt, wobei die Gate-Isolierschicht (115) zwischen ihnen eingefügt ist.

6. Flüssigkristallanzeigeeinrichtung nach einem der Ansprüche 4 bis 5, wobei das erste Substrat (1) ferner eine Isolierschicht enthält, die zwischen der Drain-Verlängerungsleitung (117) und der ersten Elektrode (11) angeordnet ist, und
wobei die Drain-Verlängerungsleitung (117) einen erweiterten Abschnitt (117E) enthält, der die Speicherkapazitätsleitung (113) überdeckt, wobei die Gate-Isolierschicht (115) zwischen ihnen eingefügt ist, und
wobei der erweiterte Abschnitt (117E) der Drain-Verlängerungsleitung (117) mit der ersten Elektrode (11) an einem Kontaktloch (119), das durch die Isolierschicht geschnitten wurde, verbunden ist, und
wobei ein weiterer opaker Inselabschnitt (126) einen reparierenden opaken Inselabschnitt (126) enthält, der einen Abschnitt der Drain-Verlängerungsleitung (117), die von dem TFT (116a) zu dem Kontaktloch (119) führt, überdeckt, wobei die Gate-Isolierschicht (115) zwischen ihnen eingefügt ist, und der eine größere Breite als die Drain-Verlängerungsleitung (117) aufweist.

## Revendications

1. Dispositif d'affichage à cristaux liquides comportant :
une couche de cristaux liquides d'alignement vertical (3) ;
un premier substrat (1) et un deuxième substrat (2), se faisant face mutuellement, la couche de cristaux liquides (3) étant interposée entre eux ;
une première électrode (11), disposée sur le premier substrat (1) afin de faire face à la couche de cristaux liquides (3) ; et
une deuxième électrode (12), disposée sur le deuxième substrat (2) afin de faire face à la couche de cristaux liquides (3) ;
dans lequel une région de pixels (10) comporte des premier, deuxième, troisième et quatrième domaines de cristaux liquides (A, B, C, D) dans lesquels des molécules de cristaux liquides (3a) sont inclinées dans des première, deuxième, troisième et quatrième directions (t₁, t₂, t₃, t₄), respectivement, autour du centre d'un plan, et
approximativement au milieu de l'épaisseur de la couche de cristaux liquides (3), en réponse à une tension appliquée entre les première et deuxième électrodes, les première, deuxième, troisième et quatrième directions (t₁, t₂, t₃, t₄) étant définies de telle sorte qu'un angle constitué, entre deux quelconques des quatre directions, soit approximativement égal à un multiple entier de 90 degrés, les premier, deuxième, troisième et quatrième domaines de cristaux liquides (A, B, C, D) étant disposés selon deux colonnes et deux rangées afin de définir un motif de matrice et de se trouver en position mutuellement adjacente, et
dans lequel le premier substrat (1) comporte un transistor à couches minces, TFT (116a), une ligne de bus de grille (112), une ligne de bus de source (114), une ligne d'extension de drain (117), une ligne de condensateur de stockage (113), et
dans lequel, au moins une partie de la ligne d'extension de drain (117) définit au moins une portion d'une partie opaque centrale qui protège sélectivement, vis-à-vis de la lumière entrante, une surface limitrophe, dans laquelle chacun des premier, deuxième, troisième et quatrième domaines de cristaux liquides (A, B, C, D) se trouve au contact d'un autre des domaines de cristaux liquides (A, B, C, D), **caractérisée par**
au moins un film d'alignement, disposé au contact de la couche de cristaux liquides (3) et définissant des directions de pré-inclinaison déterminant les directions d'inclinaison (t₁, t₂, t₃, t₄),
dans lequel le premier substrat (1) comporte en outre au moins une partie opaque formant îlot, qui est constituée de la même couche que la ligne de bus de grille (112),
dans lequel ladite au moins une partie opaque formant îlot possède une portion qui chevauche la ligne d'extension de drain (117) au moyen d'un film d'isolation de grille (115) interposé entre elles,
dans lequel la partie chevauchant la ligne d'extension de drain (117) constitue une partie de protection de bordure (122) pour protéger sélectivement au moins une partie d'une surface sombre vis-à-vis de la lumière entrante, la surface sombre étant produite à l'intérieur des domaines de cristaux liquides (A, B, C, D), et sensiblement parallèle à une partie de bordure (EG1, EG2, EG3, EG4) de la première électrode (11), et d'aspect plus sombre qu'un niveau de nuance de gris sous lequel apparaît la région de pixels (10) pour un observateur placé face au dispositif.

2. Dispositif d'affichage à cristaux liquides selon la revendication 1, dans lequel la ligne de bus de source (114) possède une structure ramifiée comportant des branches (114a, 114b) multiples, et dans lequel la partie de protection de bordure (122) chevauche l'une des branches (114a, 114b) de la ligne de bus de source (114), le film d'isolation de grille (115) étant interposé entre elles.

3. Dispositif d'affichage à cristaux liquides selon l'une des revendications 1 et 2, dans lequel le premier substrat (1) comporte en outre une couche d'isolation, disposée entre la ligne d'extension de drain (117) et la première électrode (11), et
dans lequel la ligne d'extension de drain (117) comporte une partie d'extension qui chevauche la ligne de condensateur de stockage (113), en interposant le film d'isolation de grille (115) entre elles, et
dans lequel la partie d'extension de la ligne d'extension de drain (117) est reliée à la première électrode (11) au niveau d'un trou de contact (119) qui a été ménagé au travers de la couche d'isolation, et
dans lequel une autre partie opaque formant îlot (126) comporte une portion opaque formant îlot de réparation, qui chevauche une partie de la ligne d'extension de drain (117), conduisant du transistor à couches minces, TFT (116a), au trou de contact (119), en interposant le film d'isolation de grille (115) entre elles, et possédant une largeur plus importante que la ligne d'extension de drain (117).

4. Dispositif d'affichage à cristaux liquides comportant :
une couche de cristaux liquides d'alignement vertical (3) ;
un premier substrat (1) et un deuxième substrat (2), se faisant face mutuellement, la couche de cristaux liquides (3) étant interposée entre eux ;
une première électrode (11), disposée sur le premier substrat (1) afin de faire face à la couche de cristaux liquides (3) ; et
une deuxième électrode (12), disposée sur le deuxième substrat (2) afin de faire face à la couche de cristaux liquides (3) ;
dans lequel une région de pixels (10) comporte des premier, deuxième, troisième et quatrième domaines de cristaux liquides (A, B, C, D) dans lesquels des molécules de cristaux liquides (3a) sont inclinées selon des première, deuxième, troisième et quatrième directions (t₁, t₂, t₃, t₄), respectivement, autour du centre d'un plan, et
approximativement au milieu de l'épaisseur de la couche de cristaux liquides (3), en réponse à une tension appliquée entre les première et deuxième électrodes, les première, deuxième, troisième et quatrième directions (t₁, t₂, t₃, t₄) étant définies de telle sorte qu'un angle constitué entre deux quelconques des quatre directions soit approximativement égal à un multiple entier de 90 degrés, les premier, deuxième, troisième et quatrième domaines de cristaux liquides (A, B, C, D) étant disposés selon deux colonnes et deux rangées afin de définir un motif de matrice et de se trouver en position mutuellement adjacente, et
dans lequel le premier substrat (1) comporte un transistor à couches minces, TFT (116a), une ligne de bus de grille (112), une ligne de bus de source (114), une ligne d'extension de drain (117), une ligne de condensateur de stockage (113), et
dans lequel, au moins une partie de la ligne d'extension de drain (117) définit au moins une portion d'une partie opaque centrale qui protège sélectivement, vis-à-vis de la lumière entrante, une surface limitrophe, dans laquelle chacun des premier, deuxième, troisième et quatrième domaines de cristaux liquides (A, B, C, D) se trouve au contact d'un autre des domaines de cristaux liquides (A, B, C, D),
dans lequel le premier domaine de cristaux liquides (A) est situé à proximité d'au moins une partie d'une bordure de la première électrode (11), la partie constituant une première partie de bordure (EG1), dans laquelle une direction azimutale, perpendiculaire à la partie, et pointant en direction de l'intérieur de la première électrode (11), définit un angle supérieur à 90 degrés, par rapport à la première direction (t₁) ;
le deuxième domaine de cristaux liquides (B) est situé à proximité d'au moins une partie d'une autre bordure de la première électrode (11), la partie formant une deuxième partie de bordure (EG2), dans laquelle une direction azimutale, perpendiculaire à la partie, et pointant en direction de l'intérieur de la première électrode (11), définit un angle supérieur à 90 degrés, par rapport à la deuxième direction (t₂) ;
le troisième domaine de cristaux liquides (C) est situé à proximité d'au moins une partie d'une autre bordure de la première électrode (11), la partie formant une troisième partie de bordure (EG3), dans laquelle une direction azimutale, perpendiculaire à la partie, et pointant en direction de l'intérieur de la première électrode (11), définit un angle supérieur à 90 degrés, par rapport à la troisième direction (t₃) ;
le quatrième domaine de cristaux liquides (D) est situé à proximité d'au moins une partie d'une autre bordure de la première électrode (11), la partie formant une quatrième partie de bordure (EG4), dans laquelle une direction azimutale, perpendiculaire à la partie, et pointant en direction de l'intérieur de la première électrode (11), définit un angle supérieur à 90 degrés, par rapport à la quatrième direction (t₄) ; et
chacun des premier, deuxième, troisième et quatrième domaines de cristaux liquides (A, B, C, D) est adjacent à un autre des domaines de cristaux liquides (A, B, C, D),
**caractérisé par**
au moins un film d'alignement, disposé au contact de la couche de cristaux liquides (3) et définissant des directions de pré-inclinaison déterminant les directions d'inclinaison (t₁, t₂, t₃, t₄),
dans lequel le premier substrat (1) comporte en outre au moins une partie opaque formant îlot, qui est constituée de la même couche que la ligne de bus de grille (112),
dans lequel ladite au moins une partie opaque formant îlot possède une portion chevauchant la ligne d'extension de drain (117) au moyen d'un film d'isolation de grille (115) interposé entre elles,
dans lequel la partie chevauchant la ligne d'extension de drain (117) est une partie de protection de surface d'intersection (124a, 124b) destinée à protéger, vis-à-vis de la lumière entrante, une surface dans laquelle la surface limitrophe, dans laquelle chacun des premier, deuxième, troisième et quatrième domaines de cristaux liquides (A, B, C, D) est adjacent à un autre des domaines de cristaux liquides (A, B, C, D), coupe une ligne de domaine produite à l'intérieur de l'un quelconque des domaines de cristaux liquides (A, B, C, D), et sensiblement parallèle à l'une des première, deuxième, troisième et quatrième parties de bordure (EG1, EG2, EG3, EG4), la ligne de domaine apparaissant plus sombre qu'un niveau de nuance de gris sous lequel apparaît la région de pixels (10) pour un observateur placé face au dispositif.

5. Dispositif d'affichage à cristaux liquides selon la revendication 4, dans lequel la ligne de bus source (114) possède une structure ramifiée comportant des branches (114a, 114b) multiples, et dans lequel la partie de protection de surface d'intersection (124a, 124b) chevauche en outre l'une des branches de la ligne de bus de source (114a), en interpolant entre elles le film d'isolation de grille (115).

6. Dispositif d'affichage à cristaux liquides selon l'une des revendications 4 et 5, dans lequel le premier substrat (1) comporte en outre une couche d'isolation, disposée entre la ligne d'extension de drain (117) et la première électrode (11), et
dans lequel la ligne d'extension de drain (117) comporte une partie d'extension (117E) chevauchant la ligne de condensateur de stockage (113), en interposant le film d'isolation de grille (115) entre elles, et
dans lequel la partie d'extension (117E) de la ligne d'extension de drain (117) est reliée à la première électrode (11), au niveau d'un trou de contact (119) qui a été ménagé au travers de la couche d'isolation, et
dans lequel une autre partie opaque formant îlot comporte une portion opaque formant îlot de réparation (126) qui chevauche une partie de la ligne d'extension de drain (117), reliant le transistor à couches minces, TFT (116a), et le trou de contact (119), en interposant entre eux le film d'isolation de grille, et possédant une largeur plus importante que la ligne d'extension de drain (117).
